(19)

**Europäisches Patentamt**
**European Patent Office**
**Office européen des brevets**

(11) **EP 4 539 410 A1**

(12) **EUROPEAN PATENT APPLICATION**
published in accordance with Art. 153(4) EPC

(43) Date of publication:
**16.04.2025 Bulletin 2025/16**

(21) Application number: **23820111.5**

(22) Date of filing: **08.06.2023**

(51) International Patent Classification (IPC):
*H04L 27/26* (2006.01)    *H04W 74/08* (2024.01)
*H04W 84/12* (2009.01)    *H04B 7/0452* (2017.01)
*H04W 76/11* (2018.01)

(52) Cooperative Patent Classification (CPC):
**H04B 7/0452; H04L 27/26; H04W 74/08;
H04W 76/11; H04W 84/12**

(86) International application number:
**PCT/KR2023/007859**

(87) International publication number:
**WO 2023/239176 (14.12.2023 Gazette 2023/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.06.2022   KR 20220069654
29.07.2022   KR 20220094909
03.08.2022   KR 20220096896
04.08.2022   KR 20220097463
07.09.2022   KR 20220113634**

(71) Applicant: **LG Electronics Inc.
Yeongdeungpo-gu
Seoul 07336 (KR)**

(72) Inventors:
• **BAEK, Sunhee
Seoul 06772 (KR)**
• **JANG, Insun
Seoul 06772 (KR)**
• **CHOI, Jinsoo
Seoul 06772 (KR)**

(74) Representative: **Mooser, Sebastian Thomas
Wuesthoff & Wuesthoff
Patentanwälte und Rechtsanwalt PartG mbB
Schweigerstraße 2
81541 München (DE)**

(54) **METHOD AND DEVICE FOR PERFORMING TID TO LINK-MAPPING-BASED OPERATION IN WIRELESS LAN SYSTEM**

(57)    A method and a device for operating in a wireless LAN system are disclosed. The method pe1formed by means of a first STA MLD in a wireless LAN system, according to one embodiment of the present disclosure, comprises the steps of: transmitting, to a second STA MLD, a specific element that includes a multi-user (MU) enhanced distributed channel access (EDCA) mapping field, or receiving the specific element from the second STA MLD and performing an MU EDCA operation in at least one link on the basis of the specific element, wherein the MU EDCA mapping field can include: first information related to the at least one link; and second information related to at least one traffic identifier (TID) corresponding to the at least one link.

FIG.10

TRANSMITTING A SPECIFIC ELEMENT INCLUDING THE MU EDCA MAPPING FIELD TO THE SECOND STA MLD, OR RECEIVE A SPECIFIC ELEMENT FROM THE SECOND STA MLD — S1010

PERFORMING MU EDCA OPERATION ON AT LEAST ONE LINK BASED ON THE SPECIFIC ELEMENT — S1020

EP 4 539 410 A1

## Description

[TECHNICAL FIELD]

The present disclosure relates to a communication operation in a Wireless Local Area Network (WLAN) system, and more particularly, to a method and device for performing a TID (traffic identifier)-to-link mapping-based operation in a next-generation WLAN system.

[BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

[Disclosure]

[Technical Problem]

The technical problem of the present disclosure is to provide a method and device for performing a TID-to-link mapping-based operation in a wireless LAN system.

The technical problem of the present disclosure is to provide a method and device for applying MU (multi-user) EDCA (Enhanced Distributed Channel Access) to allocate latency sensitive traffic to specific link(s) in a TID to link mapping process of a wireless LAN system and to allocate priority for channel access to traffic classified as latency sensitive traffic.

The technical objects to be achieved by the present disclosure are not limited to the above-described technical objects, and other technical objects which are not described herein will be clearly understood by those skilled in the pertinent art from the following description.

[Technical Solution]

A method performed by a first STA MLD in a wireless LAN system according to one aspect of the present disclosure may include transmitting a specific element including a multi-user (MU) enhanced distributed channel access (EDCA) mapping field to a second STA MLD or receiving the specific element from the second STA MLD; and performing an MU EDCA operation on at least one link based on the specific element, and the MU EDCA mapping field may include first information related to at least one link and second information related to at least one traffic identifier (TID) corresponding to the at least one link.

A method performed by a second STA MLD in a wireless LAN system according to one aspect of the present disclosure may include generating a specific element including a multi-user (MU) enhanced distributed channel access (EDCA) mapping field; and transmitting the specific element including the MU EDCA mapping field to a first STA MLD, and the MU EDCA mapping field may include first information related to at least one link and second information related to at least one traffic identifier (TID) corresponding to the at least one link.

[Technical Effects]

According to various embodiments of the present disclosure, a method and device for performing a TID-to-link mapping-based operation in a wireless LAN system can be provided.

According to various embodiments of the present disclosure, a method and device for applying MU EDCA to allocate delay-sensitive traffic to specific link(s) in a TID-to-link mapping process of a wireless LAN system and allocate a priority for channel access to traffic classified as delay-sensitive traffic can be provided.

According to various embodiments of the present disclosure, by creating a link for low latency traffic/data through a new field in a TID-to-link mapping negotiation process, the priority of non-low latency traffic can be lowered without modifying an existing TID-to-link mapping rule, so that transmission and reception of low latency traffic can be smoothly performed.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a block configuration diagram of a wireless communication device according to an embodiment of the present disclosure.

FIG. 2 is a diagram illustrating an exemplary structure of a WLAN system to which the present disclosure may be applied.

FIG. 3 is a diagram for describing a link setup process to which the present disclosure may be applied.

FIG. 4 is a diagram for describing a backoff process to which the present disclosure may be applied.

FIG. 5 is a diagram for describing a frame transmission operation based on CSMA/CA to which the present disclosure may be applied.

FIG. 6 is a diagram for describing an example of a frame structure used in a WLAN system to which the present disclosure may be applied.

FIG. 7 is a diagram illustrating examples of PPDUs defined in the IEEE 802.11 standard to which the present disclosure may be applied.

FIG. 8 illustrates an exemplary format of a TID-to-Link mapping element format and a TID-to-Link control field format applicable to the present disclosure.

FIG. 9 illustrates an exemplary structure of an EDCA parameter set field.

FIG. 10 is a diagram for describing an operation performed by a first STA MLD according to an embodiment of the present disclosure.

FIG. 11 is a diagram for explaining an operation performed by a second STA MLD according to an embodiment of the present disclosure.

FIG. 12 and FIG. 13 illustrate exemplary formats of a TID-to-Link element including an MU EDCA mapping field according to an embodiment of the present disclosure.

FIG. 14 and FIG. 15 illustrate exemplary formats of a TID-to-Link element including an LL MU EDCA parameter set element and an LL MU EDCA mapping field according to an embodiment of the present disclosure.

FIGS. 16 and 17 illustrate exemplary formats of LL EDCA mapping elements according to one embodiment of the present disclosure.

FIGS. 18 and 19 illustrate exemplary formats of TID-to-LINK mapping fields indicating Link and AC to which MU EDCA applies according to one embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

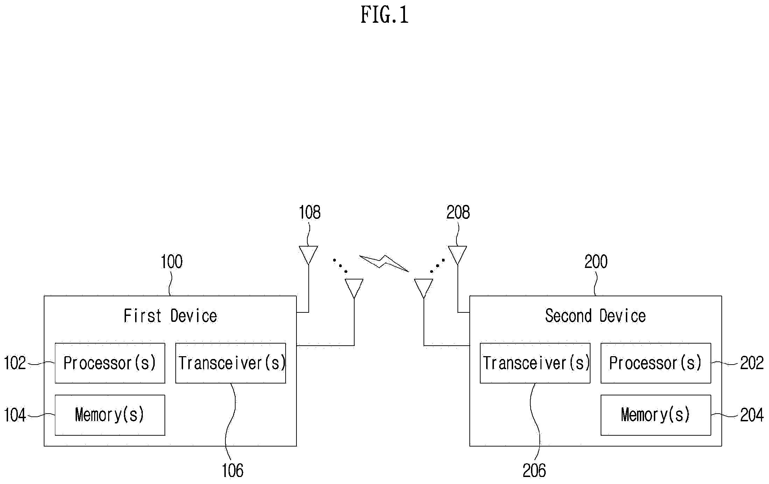

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

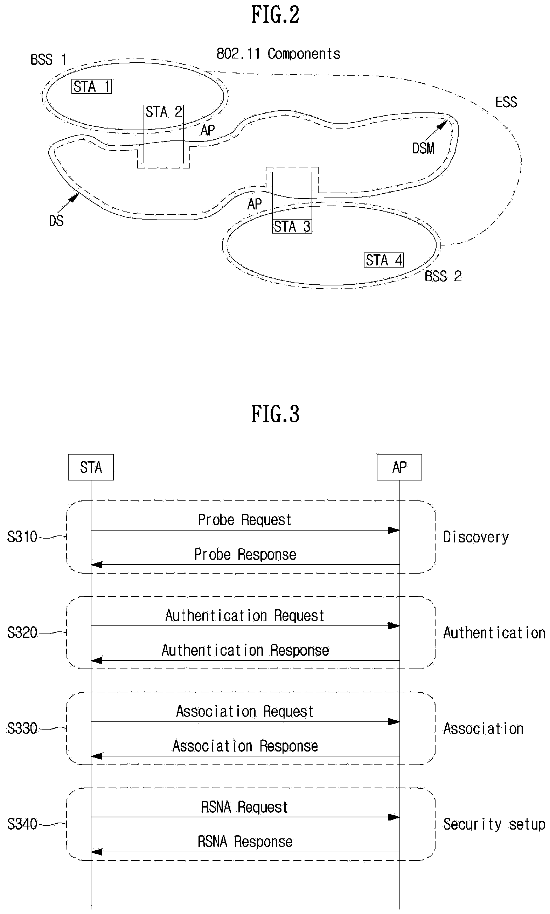

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

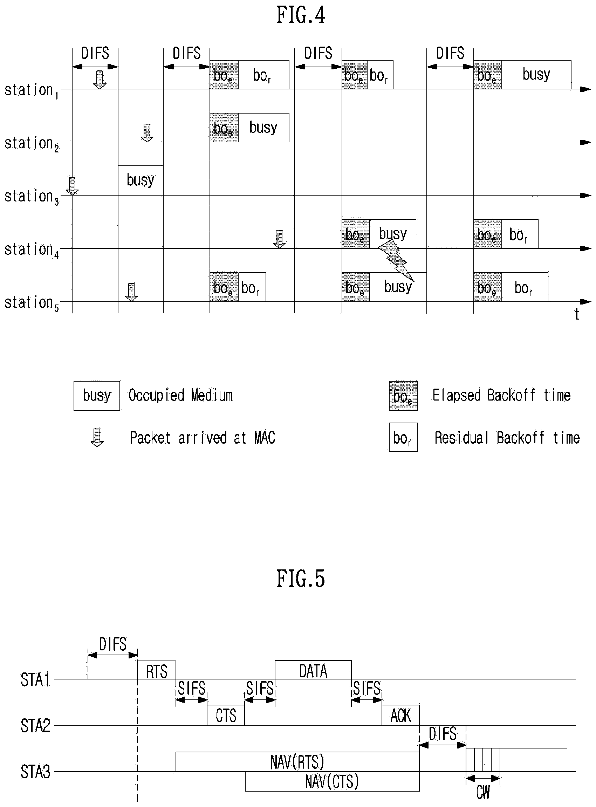

FIG. 4 is a diagram for explaining a backoff process to which the present disclosure may be applied.

In the wireless LAN system, a basic access mechanism of medium access control (MAC) is a carrier sense multiple access with collision avoidance (CSMA/-CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to $2^n-1$ (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

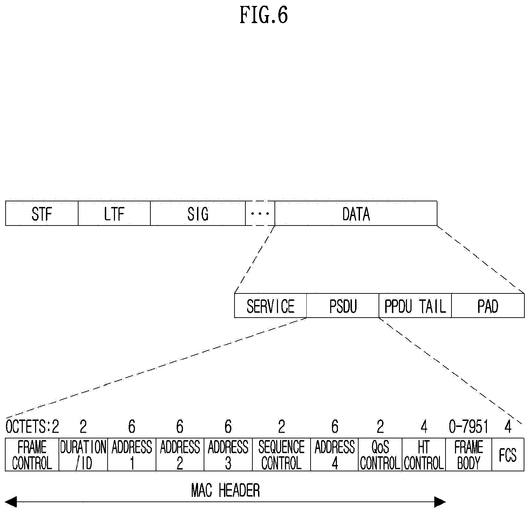

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

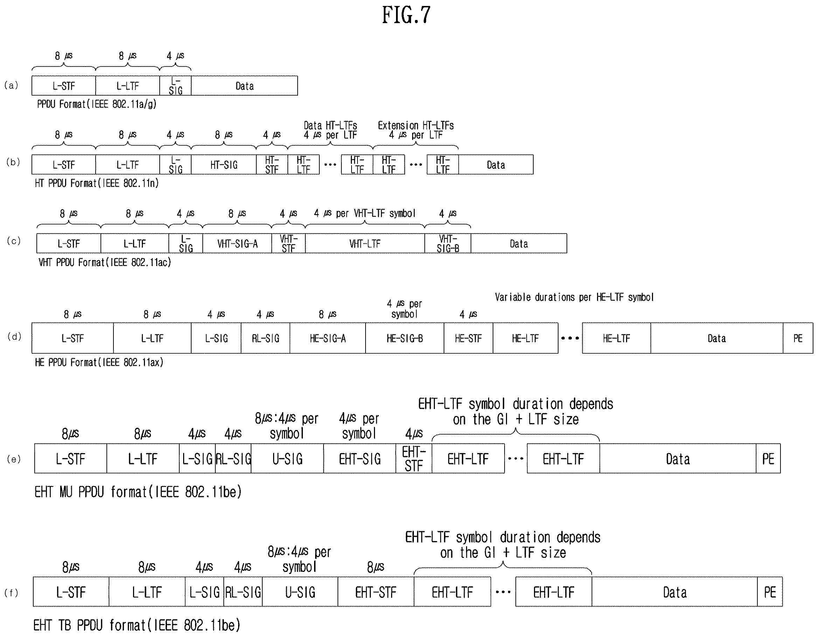

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

TID-to-Link Mapping

Hereinafter, TID-to-Link mapping during link management (LM) is described. Here, TID means an identifier that can be used by upper layer entities to distinguish MAC entities and MAC service data units (MSDUs) supporting Quality of Service (QoS) within a MAC data service.

For example, there may be 16 possible TID values. Eight of these 16 TID values may identify traffic categories (TCs) and the remaining eight may identify parameterized traffic streams (TSs). TIDs may be assigned to MSDUs above the MAC layer.

The TID-to-Link mapping mechanism refers to a mechanism that allows the AP MLD (multi-link device) that performed the multi-link setup and the non-AP MLD to determine how the setup link and TID are mapped in DL and UL.

Here, MLD means a device that has one or more affiliated STAs as a logical entity and a single MAC data service and a single MAC service access point for logical link control (LLC).

A non-AP MLD is an MLD in which each STA belonging to the MLD is a non-AP STA. A multi-radio non-AP MLD is a non-AP MLD that supports receiving or exchanging frames on more than one link at a time. An AP MLD is an MLD in which each STA belonging to the MLD is an AP.

By default, all TIDs must be mapped to all setup links for both DL and UL. If two MLDs have explicitly negotiated TID-to-Link mappings, each TID may be mapped to the same or different set of links.

A setup link is defined as enabled if at least one TID is mapped to that link, and a setup link may be defined as disabled if no TID is mapped to that link. A TID shall always be mapped to at least one setup link, unless admission control is used. By default, a TID is mapped to all setup links, so all setup links may be enabled.

When a link is enabled, the link may be used for frame exchange depending on the power state of the non-AP STAs operating on the link. Only MSDUs or A-MSDUs with TIDs mapped to the enabled link may be transmitted on the link. Management frames and control frames may only be transmitted on the enabled link.

When a link is disabled, that link may not be used for frame exchange, including management frames for both DL and UL.

During the multi-link setup process, enabling/disabling of each link may be indicated through TID-to-Link mapping. TID-to-Link mapping may be performed in default mapping mode or/and negotiation mapping mode.

The default mapping mode refers to a mode in which all TIDs are mapped to links by the AP. Specifically, in the default mapping mode, all TIDs are mapped to all setup links for DL and UL, and all setup links may be enabled. An AP MLD that has performed multi-link setup with a non-AP MLD may operate in the default mapping mode if TID-to-Link mapping negotiation for other mappings has not occurred, has failed, or is torn down.

Negotiation mapping mode means a mode in which the AP accepts or rejects information about links to be mapped to a TID when the STA transmits it to the AP through a TID-to-Link mapping element included in a (re) association request frame or a TID-to-Link mapping request frame.

Specifically, An MLD may support TID-to-Link mapping negotiation. An MLD that supports TID-to-Link mapping negotiation shall have 'dot11TIDtoLinkMappingActivated' set to 'true' and shall set the value of the TID-to-Link mapping negotiation supported subfield in the MLD Capabilities field of the base variant multi-link element to a non-zero value. Otherwise, the MLD may set the value of the 'TID-to-Link Mapping Negotiation Supported' subfield to 0.

If the AP MLD indicates support for TID-to-Link mapping negotiation in the multi-link (re)setup procedure, the non-AP MLD may initiate TID-to-Link mapping negotiation by including a TID-to-Link mapping element in the (re)association request frame.

After receiving a (re)connection request frame including a TID-to-Link mapping element, the AP MLD may respond to the (re)connection request frame according to the rules described below.

For example, the AP MLD may accept the requested TID-to-Link mapping in the TID-to-Link mapping element in the received (re)association request frame only if it accepts the multi-link (re)setup for all links for which at least one TID is requested to be mapped. In this case, the AP MLD may not include the TID-to-Link mapping element in the (re)association response frame.

Otherwise, the AP MLD may indicate rejection of the proposed TID-to-Link mapping by including a TID-to-Link mapping element suggesting a preferred TID-to-Link mapping in the (re)association response frame.

After a successful multi-link (re)setup, in order to negotiate a new TID-to-Link mapping, the initiating MLD with 'dot11TIDtoLinkMappingActivated' equal to 'true' can send a TID-to-Link Mapping Request frame individually addressed to the responding MLD indicating its support for TID-to-Link mapping negotiation.

After receiving an individually addressed TID-to-Link mapping request frame, the responding MLD may transmit an individually addressed TID-to-Link mapping response frame to the initiating MLD according to the rules described below.

For example, if the responding MLD accepts the requested TID-to-Link in the TID-to-Link Mapping element of the received TID-to-Link Mapping Request frame, the responding MLD may set the status code to 0 (SUCCESS) in the TID-to-Link Mapping Response frame.

Otherwise, the responding MLD may indicate rejection of the proposed TID-to-Link mapping by setting the status code to

'DENIED_TID_TO_LINK_MAPPING' or 'PREFERED_TID_TO_LINK_MAPPING_SUGGESTED' in the TID-to-Link Mapping Response frame. The responding MLD may propose a preferred TID-to-Link mapping by setting the status code to 'PREFERRED_TID_TO_LINK_MAPPING_SUGGESTED' in the TID-to-Link Mapping Response frame and including a TID-to-Link Mapping element in the TID-to-Link Mapping Response frame.

When two MLDs have negotiated a TID-to-Link mapping, each MLD may tear down the negotiated TID-to-Link mapping by sending individually addressed TID-to-Link Mapping Teardown frames. After teardown, the MLDs may operate in the default mapping mode.

If the MLD has successfully negotiated with a peer MLD and/or for uplink and/or downlink TID-to-Link mapping where bit position i of the Link Mapping of TID field of the TID-to-Link Mapping element is set to 0, TID n may not be mapped to a link associated with Link ID i in uplink and/or downlink.

If an MLD has successfully negotiated with a peer MLD and/or for uplink and/or downlink TID-to-Link mapping where bit position i of the Link Mapping of TID field of the TID-to-Link Mapping element is set to 1, TID n may be mapped to the link associated with link ID i in uplink and/or downlink.

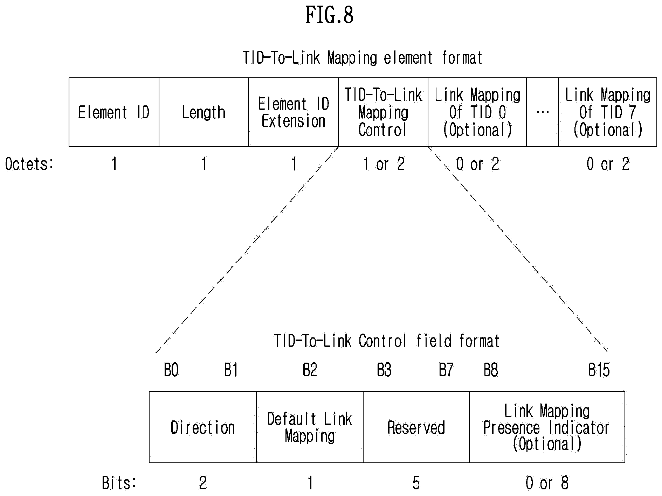

FIG. 8 illustrates a TID-to-Link mapping element format and a TID-to-Link control field format that may be applied to the present disclosure.

The TID-to-Link mapping element represents a link over which frames belonging to each TID can be exchanged. As illustrated in FIG. 8, the TID-to-Link mapping element may include an element ID subfield, a length subfield, an element ID extension subfield, a TID-to-Link mapping control subfield, and a Link Mapping of TID n subfield (where n is an integer greater than or equal to 0).

In addition, the TID-to-Link mapping control subfield may include a direction subfield, a default link mapping subfield, a reserved subfield, and a link mapping presence indicator subfield.

If the TID-to-Link mapping element provides TID-to-Link mapping information for a frame transmitted in downlink, the direction subfield value may be set to 0 (uplink). If the TID-to-Link mapping element provides TID-to-Link mapping information for a frame transmitted in uplink, the direction subfield value may be set to 1 (downlink). If the TID-to-Link mapping element provides TID-to-Link mapping information for a frame transmitted in both downlink and uplink, the direction subfield value may be set to 2 (bidirectional link). In the case of 3 among the direction subfield values, it may be reserved.

And, if the TID-to-Link mapping element indicates a default TID-to-Link mapping, the default link mapping subfield value may be set to 1. Otherwise, the default link mapping subfield value may be set to 0.

The Link Mapping Presence Indicator subfield may indicate whether a link mapping field of TID n exists on a TID-to-Link mapping element. A value of 1 at bit position n of the Link Mapping Presence Indicator subfield may indicate that the link mapping field of TID n exists on the TID-to-Link mapping element. A value of 0 at bit position n of the Link Mapping Presence Indicator subfield may indicate that the link mapping field of TID n does not exist on the TID-to-Link mapping element. When the default Link Mapping subfield value is set to 1, the Link Mapping Presence Indicator subfield may be reserved.

The link mapping field of TID n may indicate a link on which a frame belonging to TID n may be sent. A value of 1 in bit position i of the link mapping field of TID n may indicate that TID n is mapped to a link associated with link ID i for a direction specified in the direction subfield. If the default link mapping subfield value is set to 1, the link mapping field of TID n may not be present.

EDCA operation using MU EDCA parameters

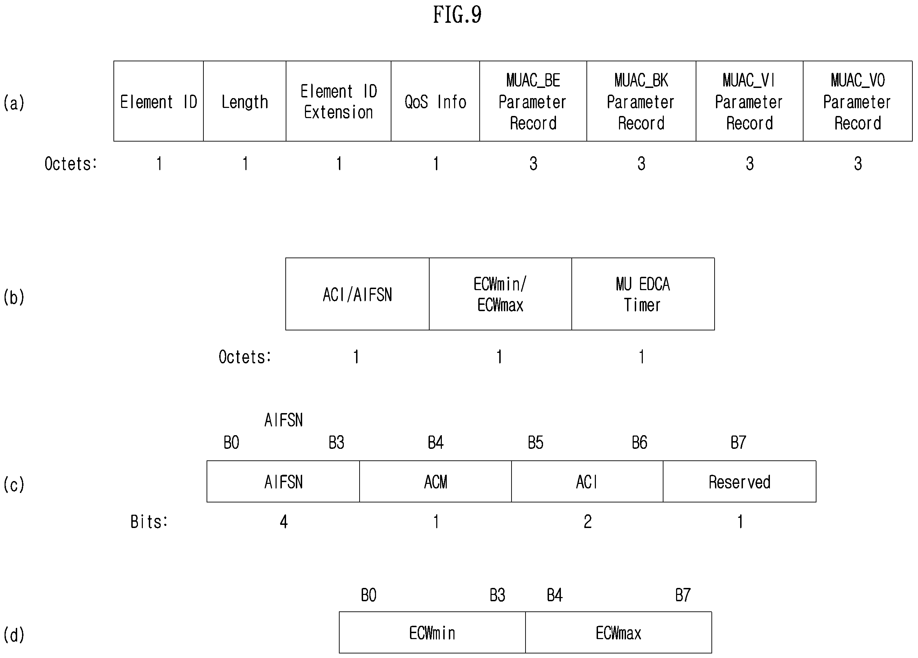

FIG. 9 (a) illustrates an MU EDCA parameter set element format. The QoS information field included in the MU EDCA parameter set element may include an EDCA parameter set update count subfield. The EDCA parameter set update count subfield may indicate when an EDCA parameter and (in the case of HE BSS) an MU EDCA parameter have changed.

The formats of the MU AC_BE, MU AC_BK, MU AC_VI and MU AC_VO parameter record fields may be the same. The format of the ACI/AIFSN field may be defined as in (b) of FIG. 9. Here, a value of 0 in the AIFSN field may indicate that EDCA is disabled for a period specified by the MU EDCA timer for the corresponding AC.

The value of AC Index (ACI) may refer to the AC to which all parameters of the corresponding record correspond. The mapping between ACI and AC can be defined as shown in Table 1.

[Table 1]

| ACI | AC | Description |
|-----|-------|-------------|
| 0 | AC_BE | Best effort |
| 1 | AC_BK | Background |
| 2 | AC_VI | Video |
| 3 | AC_VO | Voice |

The ACM (admission control required) subfield may indicate that admission control is required for the AC. If the ACM subfield value is set to 0, there may be no admission control for the AC. If the ACM subfield value is set to 1, admission control must be used before transmission using the access parameters specified for the AC. The AIFSN subfield may indicate the number of slots after SIFS that the STA delays before invoking backoff or starting transmission. The minimum value of the AIFSN subfield may be 2.

The format of the ECWin/ECWmax field may be defined as in (d) of Fig. 9. The ECWmin and ECWmax subfields can encode the values of CWmin (i.e., $2^{ECWmin-1}$) and CWmax (i.e., $2^{ECWmax-1}$) in exponential format, respectively.

The MU EDCA Timer field may indicate the duration, in units of 8 TUs, of the time that a HE STA will use the MU EDCA parameters for that AC, excluding reserved values.

A HE AP may set the QoS Information field of the MU EDCA parameter set element to the same value as the QoS Information field of the EDCA parameter set element. A HE AP may change MU EDCA parameters by including an MU EDCA parameter set element with updated MU EDCA parameters in the beacon frame and probe response frame it transmits. The EDCA parameter set update count subfield in the QoS Information field of the EDCA parameter set element and the MU EDCA parameter set element may be incremented whenever an EDCA parameter or MU EDCA parameter is changed.

A Non-AP HE STA may update 'dot11EDCATable' and 'dot11MUEDCATable' corresponding to the fields of the EDCA parameter set element or MU EDCA parameter set element within a time interval equal to one beacon interval after receiving an updated EDCA or MU EDCA parameter set from the associated AP. When the HE STA updates its MIB properties, it may store the value of the EDCA parameter set update count subfield in the QoS Info field of the received EDCA parameter set element or MU EDCA parameter set element.

A non-AP HE STA may use the EDCA Parameter Set Update Count subfield in the QoS Function element of the Beacon frame to determine whether the STA is currently using EDCA (and optionally MU EDCA) parameter values. If the EDCA Parameter Set Update Count subfield value is different from the stored values, the STA may query the AP for updated EDCA (and optionally any MU EDCA) parameter values by transmitting a Probe Request frame.

If the beacon frame has a QoS function element, the EDCA parameter set element and the MU EDCA parameter set element may not exist. Here, the HE STA may transmit a probe request frame to the AP to obtain updated parameters. A non-AP HE STA receiving a basic trigger frame including a user information field for the STA may update its CWmin[AC], CWmax[AC], AIFSN[AC] and MUEDCATimer[AC] state variables to the values included in 'dot11MUEDCATable'.

A QoS data frame may be successfully transmitted by an STA in a HE TB PPDU to an AC if the STA receives an immediate acknowledgment for that frame or if the QoS data frame does not require an immediate acknowledgment.

The MUEDCATimer[AC] state variable may be updated with the value included in the MU EDCA Timer subfield of the MU EDCA Parameter Set element. The backoff counter maintenance corresponding to the updated state variables may follow the rules except that if AIFSN[AC] is 0, the EDCAF corresponding to that AC is suspended until MUEDCATimer[AC] reaches 0 or is reset to 0.

An updated MUEDCATimer[AC] shall start at the end of the immediate response if the transmitted HE TB PPDU includes one or more QoS data frames for that AC that require immediate acknowledgment, or it may start at the end of the HE TB PPDU if the transmitted HE TB PPDU is transmitted. The HE TB PPDU MAY not include any QoS data frames for that AC that require immediate acknowledgment.

In a non-AP HE STA, each MUEDCATimer[AC] may uniformly count down without suspension to 0 when its value is nonzero.

A non-AP STA transmitting a frame for an AP having an OM Control subfield with the value of the UL MU Disable subfield set to 1, or with the value of the UL MU Disable subfield set to 0 and the value of the UL MU Data Disable subfield set to 1 may not participate in UL MU operation. Accordingly, it may not update the EDCA access parameters to the values included in the MU EDCA parameter set element.

A Non-AP STA may not update its state variables to values included in the MU EDCA parameter set elements if any of the following applies:

a) If the trigger frame to the STA is not a Basic trigger frame;
b) If the STA does not include a QoS data frame in the HE TB PPDU response sent in response to the Basic trigger frame;
c) If the STA transmits a HE TB PPDU in response to a Basic trigger frame according to a predefined rule.

A non-AP STA transmitting a frame not addressed to an associated AP may use either the EDCA parameter values included in the most recently received EDCA parameter set element sent by the STA's associated AP, or the default EDCA parameter values.

When the MUEDCATimer[AC] of a non-AP HE STA reaches 0 due to a countdown or reset after receiving an MU EDCA Reset frame, the STA may update CWmin[AC], CWmax[AC], and AIFSN[AC] to the values included in the most recently received EDCA parameter set element transmitted by the AP to which the STA is associated.

A non-AP HE STA transmitting a frame with the OM Control subfield set to 1, or with the UL MU Disable subfield set to 0 and the UL MU Data Disable subfield set to 1, may set MUEDCATimer[AC] to 0 for all ACs upon receiving an immediate acknowledgment from the OMI responder.

An STA may perform the current EDCA backoff procedure without modifying the backoff counter for QSRC[AC], QLRC[AC], or the associated EDCAF, regardless of whether MUEDCATimer[AC] reaches zero until a new EDCA backoff procedure is invoked.

In response to a MUEDCATimer[AC] reset, the STA may invoke a new EDCA backoff procedure after MUEDCATimer[AC] has been reset for that AC and after CWmin[AC], CWmax[AC] and AIFSN[AC] have been updated for that AC.

That is, the priority of the MU EDCA associated with the AC(s) indicated in the MU EDCA parameter set element during the time set in the MU EDCA timer subfield may be lower than the priority of the AC in the general EDCA operation. Accordingly, when the time set in the MU EDCA timer subfield expires, the priorities of the ACs to which the MU EDCA was applied may revert to the priorities they have in the EDCA operation.

Method for applying MU EDCA to TID(s) assigned by TID-to-Link mapping

When MU EDCA is applied to some of the TID(s) assigned to a link through TID-to-Link mapping, the TID(s) may have a lower priority for channel access than TID(s) to which MU EDCA is not applied.

Based on the rules described above, one or more links between MLD(s) may be assigned as links for delay-sensitive traffic, and MU EDCA may be utilized to assign priorities for channel access to TIDs classified as delay-sensitive traffic.

Unlike the rule that MU EDCA is applied to a specific AC during the time set by the MU EDCA timer subfield, the present disclosure assumes a case where MU EDCA is continuously applied to ACs corresponding to a TID after the TID to which MU EDCA is applied is indicated through TID-to-Link mapping.

Below, a method is described for transmitting information about which TID(s) assigned on one or more links in a TID-to-Link mapping will be applied to MU EDCA. The names of the new field(s) proposed to support the method may be changed in various ways.

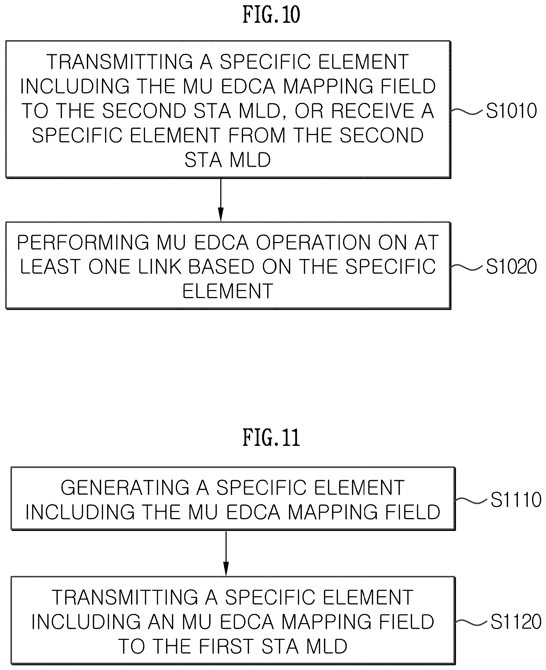

FIG. 10 is a diagram for describing an operation performed by a first STA MLD according to an embodiment of the present disclosure. In FIG. 10 and FIG. 11, the first STA MLD may mean a non-AP STA MLD and the second STA MLD may mean an AP MLD, but is not limited thereto. Each of the first STA MLD and the second STA MLD may be at least one of a non-AP STA MLD or an AP MLD.

The first STA MLD may transmit a specific element including the (LL) MU EDCA mapping field to the second STA MLD, or receive a specific element from the second STA MLD (S1010). That is, the first STA MLD may request information on a link/TID related to the (LL) MU EDCA operation from the second STA MLD, or may receive information on a link/TID related to the (LL) MU EDCA operation from the second STA MLD.

Here, the specific element may be at least one of a TID-to-Link element, an EDCA mapping element, or a LL (low latency) EDCA mapping element.

And, at least one of the TID-to-Link element, the EDCA mapping element, or the LL EDCA mapping element may include an EDCA control field and/or an LL EDCA control field. The MU EDCA control field and/or the LL EDCA control field may include a first subfield indicating whether the (LL) MU EDCA mapping field is present in at least one of the TID-to-Link element, the EDCA mapping element, or the LL EDCA mapping element.

The MU EDCA mapping field may include first information related to at least one link performing the (LL) MU EDCA operation and second information related to at least one TID corresponding to the at least one link.

As an example of the present disclosure, the (LL) MU EDCA mapping field may include a second subfield including an ID value of at least one link performing the (LL) MU EDCA operation or a bitmap representing the at least one link. Here, the first information may be indicated by the second subfield.

And, the (LL) MU EDCA mapping field may include at least one third subfield indicating at least one TID associated with the (LL) MU EDCA operation corresponding to at least one link performing the (LL) MU EDCA operation. Here, the second information may be indicated by at least one third subfield. And, the number of at least one third subfield may be equal to the number of at least one link.

As an example of the present disclosure, the TID-to-Link element may be configured based on a MU EDCA parameter set element or a LL MU EDCA parameter set element.

Here, the LL MU EDCA parameter set element includes a plurality of LL MU TID parameter record fields, and each of the plurality of LL MU TID parameter record fields may include an LL MU EDCA timer subfield.

When a TID-to-Link element is configured based on a LL MU EDCA parameter set element, the (LL) MU EDCA mapping field may be associated with an LL MU EDCA operation. At least one link performing the LL MU EDCA operation may be indicated by the first information, and at least one TID associated with the LL MU EDCA operation may be indicated by the second information.

As another example of the present disclosure, the (LL) MU EDCA mapping field may include third information related to at least one AC (access category) associated with the (LL) MU EDCA operation. The (LL) MU EDCA mapping field may include at least one fourth subfield indicating at least one AC corresponding to each of at least one link. Here, the third information may be indicated by the fourth subfield.

The first STA MLD may perform (LL) MU EDCA operation on at least one link based on the specific element (S1020).

The method performed by the first STA MLD described in the example of FIG. 10 may be performed by the first device (100) of FIG. 1. For example, one or more processors (102) of the first device (100) of FIG. 1 may be configured to transmit a specific element including an MU EDCA mapping field to the second STA MLD or receive a specific element from the second STA MLD via one or more transceivers (106). The one or more processors (102) may be configured to perform an MU EDCA operation on at least one link based on the specific element.

Furthermore, one or more memories (104) of the first device (100) may store instructions for performing the method described in the example of FIG. 10 when executed by one or more processors (102).

FIG. 11 is a diagram for describing an operation performed by a second STA MLD according to one embodiment of the present disclosure.

The second STA MLD may generate a specific element including the (LL) MU EDCA mapping field (S1110).

For example, the second STA MLD may generate a specific element including an (LL) MU EDCA mapping field based on the (LL) MU EDCA parameter set element.

The second STA MLD may transmit a specific element including an MU EDCA mapping field to the first STA MLD (S1120).

The configuration of specific elements and (LL) MU EDCA mapping fields has been described with reference to Fig. 10, so redundant description will be omitted.

The method performed by the second STA MLD described in the example of FIG. 11 may be performed by the second device (200) of FIG. 1. For example, one or more processors (202) of the second device (200) of FIG. 1 may be configured to generate a specific element including an (LL) MU EDCA mapping field. The one or more processors (202) may be configured to transmit the specific element including the MU EDCA mapping field to the first STA MLD via one or more transceivers (206).

Furthermore, one or more memories (204) of the second device (200) may store commands for performing the method described in the example of FIG. 11 when executed by one or more processors (202).

The following describes in detail a method for transmitting information on which TIDs among TID(s) allocated on one or more links are to which MU EDCA is to be applied in TID-to-Link mapping.

In the case of R(restricted)-TWT (target wake time), which is a technology for transmitting and receiving LL traffic/data in a basic wireless communication system, a TWT negotiation operation, a rule for stopping a TXOP in progress before the start time of the R-TWT SP to guarantee the corresponding R-TWT SP (Service Period), and an overlapping quiet interval allocated to overlap with the corresponding R-TWT SP may be applied.

The above-described rules and operations may disadvantage STAs that do not support R-TWT. Accordingly, MU EDCA may be utilized in the TID-to-Link Mapping process to assign specific links as links for delay-sensitive traffic and to give priority for channel access to TIDs classified as delay-sensitive traffic.

The method described through the following embodiment(s) may include both a method (UL) in which the STA MLD transmits a TID-to-Link element including information about the TID(s) to which MU EDCA applies and the link(s) on which the corresponding TID(s) operate to the AP MLD, as well as a method (DL) in which the AP MLD transmits a TID-to-Link element including the corresponding information to the STA MLD.

Embodiment 1

Embodiment 1 relates to a method of transmitting information on which TIDs among TID(s) assigned to a link are to which MU EDCA is to be applied when only one link performs the MU EDCA operation based on the MU EDCA parameter set.

If MU EDCA operation is possible on a link between MLDs, a new field may be included in the TID-to-Link element.

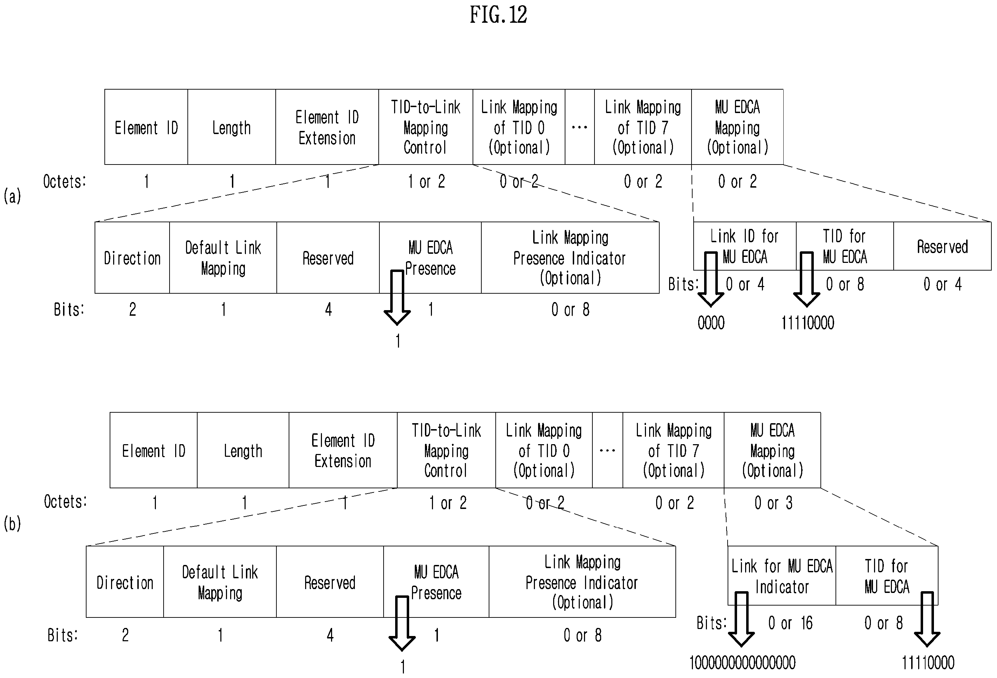

The new field(s) proposed in the present disclosure may be based on the format of a TID-to-Link element, and the values of the new field(s) may be based on the values of a MU EDCA parameter set element. A TID-to-Link element including relevant new fields in MU EDCA may be defined as in (a) or (b) of FIG. 12.

As an example of the present disclosure, as illustrated in (a) of FIG. 12, the presence or absence of a link on which MU EDCA operates may be indicated through an MU EDCA presence subfield included in a TID-to-Link mapping control field of a TID-to-Link element.

For example, if the value of the MU EDCA presence subfield is 1 (or 0), the TID-to-Link element may have an MU EDCA mapping field. The MU EDCA mapping field may include a 'Link ID for MU EDCA' subfield indicating an ID of a link operating MU EDCA (i.e., a link to which MU EDCA is applied). In addition, the MU EDCA mapping field may include a 'TID for MU EDCA' subfield indicating TID(s) applying MU EDCA to the link as a bitmap.

The 'Link ID for MU EDCA' subfield may have a size of 4 bits to indicate the Link ID. The 'TID for MU EDCA' subfield may have a size of 8 bits (i.e., 1 octet) to indicate whether MU EDCA is applied to each of TID 0 to TID 7 as a bitmap. In order to match the length of the MU EDCA mapping field to an octet, 4 bits of the MU EDCA mapping field may be reserved.

For example, (a) of FIG. 12 illustrates a case where Link 0 is a link performing MU EDCA and ACs to which MU EDCA is applied are ACs corresponding to TIDs 0, 1, 2, and 3. For example, the 'Link ID for MU EDCA' subfield may indicate the ID ('0000') of the corresponding Link, and the 'TID for MU EDCA' subfield may be set to '11110000' to indicate TIDs 0, 1, 2, and 3. Here, the MU EDCA presence field value in the TID-to-Link mapping control field may be set to 1.

As an example of the present disclosure, as illustrated in (b) of FIG. 12, the presence or absence of a link on which MU EDCA operates can be indicated through an MU EDCA presence subfield included in a TID-to-Link mapping control field of a TID-to-Link element.

For example, if the corresponding MU EDCA presence subfield value is 1 (or 0), the corresponding TID-to-Link element may have an MU EDCA mapping field. The MU EDCA mapping field may include a 'Link for MU EDCA Indicator' subfield that bitmaps an MU EDCA indicator indicating a link operating as MU EDCA.

Here, similar to (a) of FIG. 12, the MU EDCA mapping field may include a 'TID for MU EDCA' subfield for indicating the TID(s) to which MU EDCA applies on the link.

The 'Link for MU EDCA Indicator' subfield may have a size of 16 bits (i.e., 2 octets) to indicate the maximum number of links that the MLD has. The 'TID for MU EDCA' subfield may have a size of 8 bits (i.e., 1 octet) to indicate, as a bitmap, whether MU EDCA of TID 0 to TID 7 is applied, similar to (a) of FIG. 12.

The Link for MU EDCA Indicator subfield has a size of 16 bits (2 octets) to indicate the maximum number of links that MLD has in 11be. The TID for MU EDCA field has a size of 8 bits (1 octet) to indicate the application of MU EDCA of TID 0 to TID 7 as a bitmap, as in FIG. 1.

As an example, (b) of FIG. 12 illustrates a case where Link 0 is a link performing MU EDCA and ACs to which MU EDCA is applied are ACs corresponding to TIDs 0, 1, 2, and 3. For example, the 'Link ID for MU EDCA indicator' subfield may indicate the ID of the corresponding Link ('1000000000000000'), and the 'TID for MU EDCA' subfield may be set to '11110000' to indicate TIDs 0, 1, 2, and 3. In this case, the MU EDCA presence field value in the TID-to-Link mapping control field may be set to 1.

Embodiment 2

Embodiment 1 relates to a method of transmitting information on which TIDs among TID(s) assigned to a link are to which MU EDCA is to be applied when one or more links perform an MU EDCA operation based on an MU EDCA parameter set.

If MU EDCA operation is possible on one or more links between MLDs, a new field may be included in the TID-to-Link element.

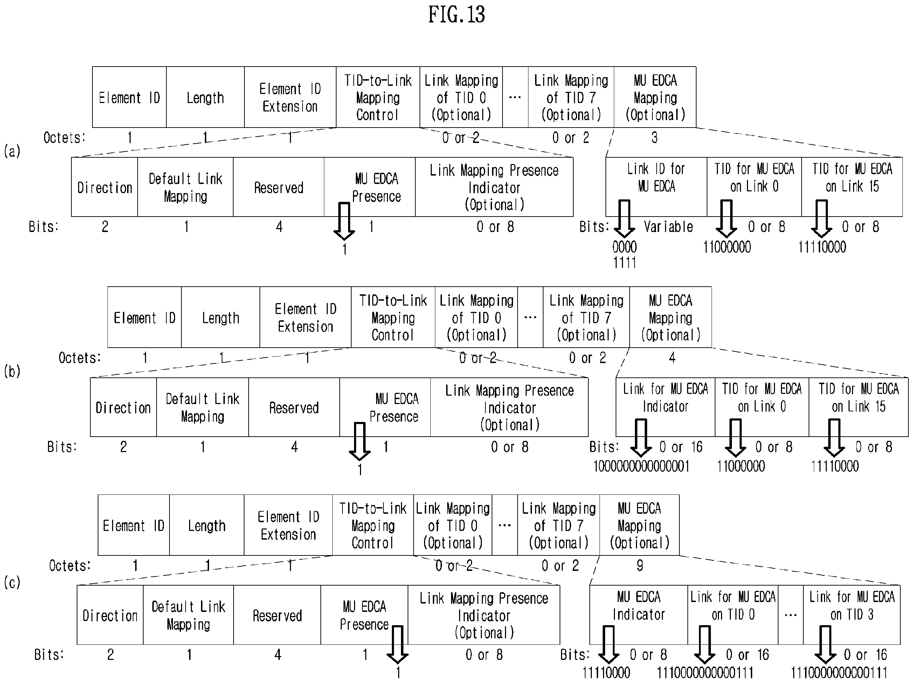

The new field(s) proposed in the present disclosure may be based on the format of the TID-to-Link element, and the values of the new field(s) may be based on the values of the MU EDCA parameter set element. The TID-to-Link element including the relevant new field in the MU EDCA may be defined as in (a) of FIG. 13, (b) of FIG. 13, or (c) of FIG. 13.

As illustrated in (a) of FIG. 13, when the MU EDCA operation is applied to one or more Links, the TID-to-Link element can indicate the presence or absence of a Link on which the MU EDCA operates through the MU EDCA presence subfield in the TID-To-Link mapping control field.

For example, when the MU EDCA presence subfield value is set to 1, the corresponding TID-to-Link element may include an MU EDCA mapping field. The MU EDCA mapping field may indicate the ID of the Link to which MU EDCA applies through the 'Link ID for MU EDCA' subfield.

Additionally, the MU EDCA mapping field may include a TID for MU EDCA on Link N ('TID for MU EDCA on Link N') subfield, which represents the TID(s) operating MU EDCA on each link as a bitmap.

The name of the 'Link ID for MU EDCA' subfield may be the same as the name of the corresponding field illustrated in (a) of Fig. 12. However, unlike the field illustrated in (a) of Fig. 12, the 'Link ID for MU EDCA' subfield illustrated in (a) of Fig. 13 may indicate Link IDs to which MU EDCA is applied in an array format. Accordingly, the length of the 'Link ID for MU EDCA' subfield illustrated in (a) of Fig. 13 may be variable. For example, the length of the 'Link ID for MU EDCA' subfield is

$$\lceil m/8 \rceil$$ (m = 4 bits * number of Link IDs), and may have a maximum of 64 bits (8 octets).

The 'TID for MU EDCA on Link N' subfield can correspond Link ID(s) indicated in an array form to Link N (N=0, 1, ... 15). Accordingly, the 'TID for MU EDCA on Link N' subfield can indicate information on whether MU EDCA is applied to TIDs 0 to 7 on each Link as a bitmap, and can have a size of 8 bits (1 octet).

The maximum length that the MU EDCA mapping field can have is 192 bits (i.e., 24 octets). Here, the number of Link IDs indicated by the 'Link ID for MU EDCA' subfield and the number of 'TID for MU EDCA on Link N' subfield can be the same.

For example, as illustrated in (a) of FIG. 13, when MU EDCA is applied to one Link ID, the 'Link ID for MU EDCA' subfield may have a length of 8 bits (1 octet). And, the 'Link ID for MU EDCA' subfield may have the value of the 5th to 8th bits set to 0. This means Link 0, but the 'TID for MU EDCA on Link 0' subfield may not be included in the corresponding TID-to-Link element.

In the case described above, if Link 0 is indicated by one Link ID, the 'Link ID for MU EDCA' subfield value having a length of 8 bits (1 octet) may have '0000000'. And, the corresponding TID-to-Link element may include one 'TID for MU EDCA Link 0' subfield.

For example, when MU EDCA is applied to Link 0 and Link 15, it is assumed that the TIDs to which MU EDCA is applied in Link 0 correspond to TID 0 and 1, and the TIDs to which MU EDCA is applied in Link 15 correspond to TID 0, 1, 2, and 3. Here, the value of the MU EDCA presence field in the TID-to-Link mapping control field can be set to 1. In addition, the 'Link ID for MU EDCA' subfield indicates a link in an array form, and can have values of '0000' and '1111'. In order to indicate information on the TID to which MU EDCA is applied in each link, the value of the 'TID for MU EDCA on Link 0' subfield can be set to '11000000', and the value of the 'TID for MU EDCA on Link 15' subfield may be set to '11110000'.

As another example of the present disclosure, as illustrated in (b) of FIG. 13, when the MU EDCA operation is applied to one or more Links, the presence or absence of a Link on which the MU EDCA operates can be indicated through an MU EDCA presence subfield in the TID-To-Link mapping control field of a TID-to-Link element. For example, when the value of the MU EDCA presence subfield is 1 (or 0), the corresponding TID-to-Link element can have an MU EDCA mapping field.

The MU EDCA mapping field may include a 'Link for MU EDCA Indicator' subfield that indicates, as a bitmap, the Link on which MU EDCA operates. It may include a 'TID for MU EDCA on Link N (N = 0, 1, ..., 15)' subfield that indicates, as a bitmap, the TID that operates MU EDCA on each Link.

The 'Link for MU EDCA Indicator' subfield may have a size of 10 bits (2 octets) to indicate the maximum number of links that the MLD can have, similar to (b) in FIG. 12.

The 'TID for MU EDCA Link N' subfields may indicate TID information on which MU EDCA is applied on the link(s) that are indicated as links on which MU EDCA operates in the 'Link for MU EDCA Indicator' subfield. That is, the number of 1s in the 'Link for MU EDCA Indicator' subfield and the number of 'TID for MU EDCA on Link N' subfield can be the same.

For example, when MU EDCA is applied to Link 0 and Link 15, it is assumed that the TIDs to which MU EDCA is applied in Link 0 correspond to TID 0 and 1, and the TIDs to which MU EDCA is applied in Link 15 correspond to TID 0, 1, 2, and 3. Here, the value of the MU EDCA presence field in the TID-to-Link mapping control field can be set to 1. In addition, the 'Link for MU EDCA Indicator' subfield may indicate the link in bitmap form and may have a value of '1000000000000001'. To indicate information on the TID to which MU EDCA is applied in each link, the 'TID for MU EDCA on Link 0' subfield value may be set to '11000000', and the 'TID for MU EDCA on Link 15' subfield value may be set to '11110000'.

As another example of the present disclosure, as illustrated in (c) of FIG. 13, when MU EDCA operation is performed on one or more links, the presence or absence of a link on which MU EDCA is performed can be indicated through the MU EDCA presence subfield in the TID-To-Link mapping control field of the TID-to-Link element. If the value of the corresponding MU EDCA presence subfield is 1 (or 0), the corresponding TID-to-Link element can have an MU EDCA mapping field.

The MU EDCA mapping field may include an MU EDCA indicator subfield and a 'Link for MU EDCA on TID n' subfield, and may have a length of up to 17 octets.

Link(s) to which MU EDCA is applied may be indicated by a value of 1 in the subfield corresponding to each TID. Here, the presence or absence of the subfield corresponding to each TID is indicated by 1 or 0 by the MU EDCA indicator field, and can have a length of 1 octet to indicate TID 0 to TID 7 as a bitmap. If the MU EDCA indicator field value is set to 1, it can indicate the presence of the subfield of the corresponding TID.

That is, when a specific bit of the bitmap corresponding to TID 0 to TID 7 in the MU EDCA indicator subfield is set to 1, it may mean that the corresponding TID is a TID to which MU EDCA is applied. The subfields of the corresponding TID may be positioned such that the 'Link for MU EDCA on TID n' subfield is located after the MU EDCA indicator subfield.

In order to indicate the Links to which MU EDCA is applied for the corresponding TID n in each 'Link for MU EDCA on TID n' subfield, the bitmap corresponding to each Link has a value of 1 or 0, and each subfield can have a length of 2 octets in order to indicate all Links with a bitmap.

For example, it is assumed that TIDs to which MU EDCA is applied are TID 0, 1, 2, and 3, and MU EDCA operates on Links 0, 1, 2, 13, 14, and 15. As illustrated in (c) of FIG. 13, the MU EDCA indicator subfield can indicate that MU EDCA is applied to TIDs 0, 1, 2, and 3 with a value of '11110000'.

In addition, as illustrated in (c) of FIG. 13, a 'Link for MU EDCA on TID n' subfield corresponding to TID n having a value of 1 may exist. Here, the 'Link for MU EDCA on TID 0' subfield, the 'Link for MU EDCA on TID 1' subfield, the 'Link for MU EDCA on TID 2' subfield, and the 'Link for MU EDCA on TID 3' subfield may be arranged in this order after the 'MU EDCA Indicator' subfield.

And, the MU EDCA mapping field has a total length of 9 octets. Since the 'Link for MU EDCA on TID 0' subfield value is set to '1110000000000111', it may be indicated that TID 0 to which MU EDCA is applied operates on Link 0, 1, 2, 13, 14, and 15. Other 'Link for MU EDCA on TID 1' subfield, 'Link for MU EDCA on TID 2' subfield, and 'Link for MU EDCA on TID 3' subfield may also have the same value (i.e., '1110000000000111'). Accordingly, it may be indicated that TIDs to which MU EDCA is applied operate on Link 0, 1, 2, 13, 14, and 15.

(c) of FIG. 13 illustrates a case where TIDs to which MU EDCA is applied are the same on Links 0, 1, 2, 3, 13, 14, and 15. However, this is only an example, and TIDs to which MU EDCA is applied on each link may be different. For example, TIDs to which MU EDCA is applied on Link 0 and Link 1 may be TID 0 and TID 3, and TIDs to which MU EDCA is applied on Link 3 may be TID 1 and TID 2.

Embodiment 3

Embodiment 3 relates to a method of transmitting information on which TIDs among TID(s) assigned to a link will be applied MU EDCA when MU EDCA is applied to only one link based on an LL MU EDCA parameter set.

Assuming that MU EDCA can operate on a single link between MLDs, relevant new field(s) may be added to the TID-to-Link element.

The new field described in the present disclosure is based on the format of the 'TID-to-Link element', and the new field value(s) may be based on the value(s) of the new Low Latency (LL) MU EDCA parameter set element. The LL MU EDCA parameter set means an EDCA parameter set for LL data.

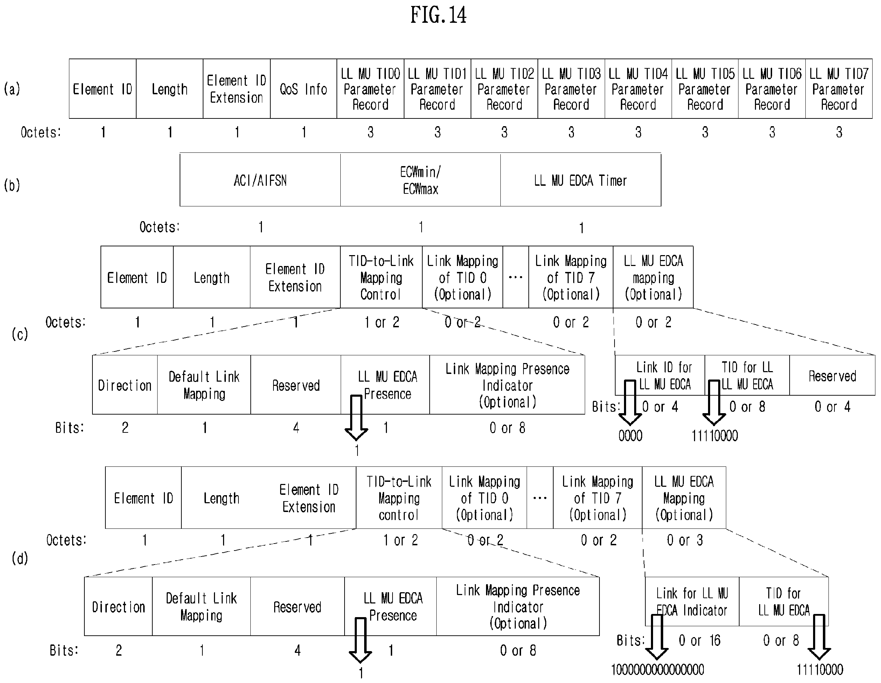

The LL MU EDCA parameter set element of the present disclosure can be defined as shown in (a) and (b) of FIG. 14. The name and the length of each field of the LL MU EDCA parameter set element shown in (a) of FIG. 14 can vary.

As illustrated in Fig. 14(a), a total of eight LL MU TID n parameter record fields with a length of 3 octets, corresponding to TID 0 to TID 7, may be located after the QoS information field of the LL MU EDCA parameter set element.

Each LL MU TID n parameter record field may be configured as in (b) of Fig. 14. Here, each LL MU TID n parameter record field may be configured identically to the MU AC parameter record field format field in the MU EDCA parameter set element described above.

As an example of the present disclosure, as illustrated in (c) of FIG. 14, the TID-to-Link element may indicate the presence or absence of a Link on which MU EDCA operates via the LL MU EDCA presence subfield in the TID-To-Link mapping control field.

For example, when the value of the corresponding LL MU EDCA presence subfield is 1 (or 0), the corresponding TID-to-Link element may have an LL MU EDCA mapping field. The LL MU EDCA mapping field may include a 'Link ID for LL MU EDCA' subfield which indicates a link on which MU EDCA operates by means of a Link ID. In addition, the LL MU EDCA mapping field may include a 'TID for LL MU EDCA' subfield which indicates TID(s) to which MU EDCA is applied to the corresponding link as a bitmap.

The 'Link ID for LL MU EDCA' subfield may have a size of 4 bits to indicate the Link ID. The 'TID for LL MU EDCA' subfield can have a size of 8 bits (i.e., 1 octet) to indicate whether MU EDCA of TID 0 to TID 7 is applied as a bitmap. In order to set the length of the LL MU EDCA mapping field in octet units, the LL MU EDCA mapping field can have 4 reserved bits.

For example, when MU EDCA operates/applies to Link 0, it is assumed that the AC to which MU EDCA is applied is the AC corresponding to TID 0, 1, 2, and 3. Accordingly, the value of the LL MU EDCA presence field in the TID-to-Link mapping control field may be indicated as 1. And, the value of the 'Link ID for LL MU EDCA' subfield may be set to '0000', and the 'TID for LL MU EDCA' field may have a value of '11110000' to indicate TID 0, 1, 2, and 3.

As an example of the present disclosure, as illustrated in (d) of FIG. 14, the TID-to-Link element may include an LL MU EDCA presence subfield. The LL MU EDCA presence subfield of the TID-to-Link element may be identical to the LL MU EDCA presence subfield illustrated in (c) of FIG. 14.

The LL MU EDCA mapping field may include a 'Link for LL MU EDCA Indicator' that indicates a link on which MU EDCA operates based on a bitmap. Similar to (c) of FIG. 14, the LL MU EDCA mapping field may include a 'TID for LL MU EDCA' subfield for indicating a TID on which MU EDCA is applied on the corresponding link.

The 'Link for LL MU EDCA Indicator' subfield may have a size of 16 bits (2 octets) to indicate the maximum number of links that the MLD has. The 'TID for LL MU EDCA' field may have a size of 8 bits (1 octet) to indicate whether MU EDCA of TID 0 to TID 7 is applied based on a bitmap.

For example, when MU EDCA operates/applies to Link 0, it is assumed that the AC to which MU EDCA is applied is an AC corresponding to TID 0, 1, 2, and 3. Accordingly, the value of the LL MU EDCA presence field in the TID-to-Link mapping control field may be indicated as 1. And, the value of the bitmap-based 'Link ID for LL MU EDCA indicator' subfield is set to '1000000000000000', and the 'TID for LL MU EDCA' field can have a value of '11110000' to indicate TID 0, 1, 2, and 3.

Embodiment 4

Embodiment 4 relates to a method of transmitting information on which TIDs among TID(s) assigned to a link will be applied MU EDCA when MU EDCA is applied to only one or more links based on an LL MU EDCA parameter set.

Assuming that one or more links between MLDs are capable of MU EDCA operation, the TID-to-Link element may include a new field. The new field described in the present disclosure is based on the format of the 'TID-to-Link element', and the new field value(s) may be based on the values of a new Low Latency (LL) MU EDCA parameter set element. The LL MU EDCA parameter set means an EDCA parameter set for LL data. The LL MU EDCA parameter set **means an** EDCA parameter set for LL data.

The LL MU EDCA parameter set element of the present disclosure may be defined as shown in (a) and (b) of Fig. 14. The name and the length of each field of the LL MU EDCA parameter set element shown in (a) of Fig. 14 may vary.

The LL MU EDCA parameter set element illustrated in Fig. 14(a) and each LL MU TID n parameter record field illustrated in Fig. 14(b) have been described in Example 3, so redundant description is omitted.

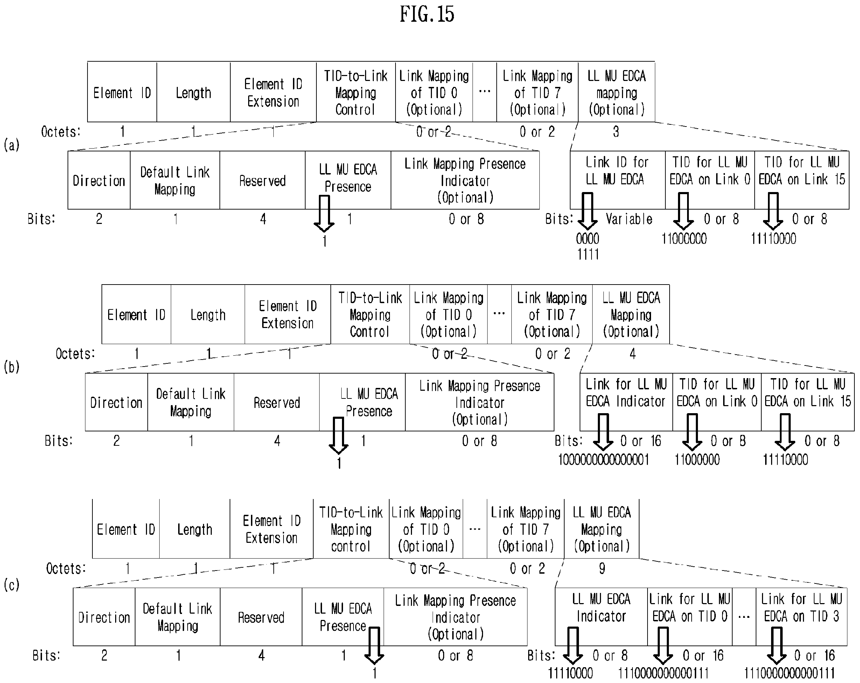

As illustrated in (a) of Fig. 15, when the MU EDCA operation is applied to one or more Links, the TID-to-Link element can indicate the presence or absence of a link on which the MU EDCA operates through the LL MU EDCA presence subfield in the TID-To-Link Mapping Control field. When the value of the LL MU EDCA presence subfield is 1, the TID-to-Link element may have an LL MU EDCA mapping field.

The LL MU EDCA mapping field may indicate the ID of a link on which MU EDCA operates via the 'Link ID for LL MU EDCA' subfield. The LL MU EDCA mapping field may include the 'TID for LL MU EDCA on Link N (N = 0, 1, ..., 15)' subfield which indicates the TID that operates MU EDCA on each link based on a bitmap.

The 'Link ID for LL MU EDCA' subfield may indicate a Link ID in the form of an array. Unlike the 'Link ID for LL MU EDCA' subfield having a length of 4 bits in (c) of Fig. 14, the 'Link ID for LL MU EDCA' subfield may have a variable value.

Here, the length of the 'Link ID for LL MU EDCA' subfield is $\lceil m/8 \rceil$ (m = 4 bits * number of Link IDs), and may have a maximum of 64 bits (8 octets). The 'TID for LL MU EDCA on Link N' subfield may correspond Link IDs indicated in an array form to Link N (N=0, 1, ..., 15). Accordingly, the 'TID for LL MU EDCA on Link N' subfield may indicate information on whether MU EDCA applies TID 0 to TID 7 on each Link based on a bitmap, and may have a size of 8 bits (1 octet).

Accordingly, the maximum length that the LL MU EDCA mapping field can have is 192 bits (24 octets). Here, the number of Link IDs indicated by the 'Link ID for LL MU EDCA' subfield and the number of 'TID for LL MU EDCA on Link N' subfield can be the same.

As illustrated in (a) of Fig. 15, when the 'Link ID for LL MU EDCA' subfield has one Link ID, the field may have a length of 8 bits (1 octet). And, bit values 5 to 8 of the field may be set to 0.

This means Link 0, but the 'TID for LL MU EDCA on Link 0' subfield may not be included in the corresponding TID-to-Link element. For example, if one Link ID indicates Link 0, the 'Link ID for LL MU EDCA' subfield with a length of 8 bits (1 octet) has the value '0000000', and the corresponding TID-to-Link element may include one 'TID for LL MU EDCA Link 0' subfield.

For example, when MU EDCA is applied to Link 0 and Link 15, it is assumed that the TIDs to which MU EDCA is applied in each link correspond to TID 0 and 1 in Link 0, and TID 0, 1, 2, and 3 in Link 15. Accordingly, the value of the LL MU EDCA presence field in the TID-to-Link mapping control field may be set to 1. The 'Link ID for LL MU EDCA' subfield may be set to '0000' and '1111'. In order to indicate information on the TID to which MU EDCA is applied in each link, the value of the 'TID for LL MU EDCA on Link 0' subfield may be set to '11000000', and the value of the 'TID for LL MU EDCA on Link 15' subfield may be set to '11110000'.

As an example of the present disclosure, as illustrated in (b) of FIG. 15, the TID-to-Link element may include an LL MU EDCA presence subfield. The LL MU EDCA presence subfield of the TID-to-Link element may be identical to the LL MU EDCA presence subfield of the TID-to-Link element illustrated in (a) of FIG. 15.

The LL MU EDCA mapping field may include a 'Link for LL MU EDCA Indicator' subfield that indicates a link on which MU EDCA operates based on a bitmap. It may include 'TID for LL MU EDCA on Link N (N = 0, 1, ..., 15)' subfields that indicate a TID that operates MU EDCA on each link using a bitmap.

The 'Link for LL MU EDCA Indicator' subfield may have a size of 16 bits (2 octets) to indicate the maximum number of links that the MLD can have. The 'TID for LL MU EDCA Link N' subfields can indicate TID information to which MU EDCA is applied on the link(s) indicated as links on which MU EDCA operates in the 'Link for LL MU EDCA Indicator' subfield.

That is, the number of 1s in the 'Link for LL MU EDCA Indicator' subfield and the number of 'TID for LL MU EDCA on Link N' subfield may be the same.

For example, when MU EDCA is applied to Link 0 and Link 15, it is assumed that the TIDs to which MU EDCA is applied in each link correspond to TID 0 and 1 in Link 0, and TID 0, 1, 2, and 3 in Link 15. Accordingly, the value of the LL MU EDCA presence field in the TID-to-Link mapping control field may be set to 1. The 'Link for LL MU EDCA Indicator' subfield may have '100000000000001'. In order to indicate information of the TID to which MU EDCA is applied in each link, the value of the 'TID for LL MU EDCA on Link 0' subfield may be set to '11000000', and the value of the 'TID for LL MU EDCA on Link 15' subfield may be set to '11110000'.

As another example of the present disclosure, as illustrated in (c) of FIG. 15, the TID-to-Link element may include an LL MU EDCA Present subfield. The LL MU EDCA Present subfield may be identical to the LL MU EDCA Present subfield illustrated in (a) of FIG. 15.

The LL MU EDCA mapping field may include an LL MU EDCA Indicator subfield and a 'Link for LL MU EDCA on TID n' subfield, and may have a length of up to 17 octets.

Links on which MU EDCA operates may be indicated by a value of 1 in the subfield corresponding to each TID. Here, the presence or absence of the subfield corresponding to each TID may be indicated through 1 (i.e. presence) and 0 (i.e. absence) in the 'LL MU EDCA indicator subfield'. The 'LL MU EDCA indicator subfield' may have a length of 1 octet to indicate TIDs 0 to 7 based on a bitmap.

That is, if the bitmap corresponding to TID 0 to TID 7 in the LL MU EDCA indicator subfield has a value of 1, it may mean that the corresponding TID is a TID to which MU EDCA is applied. In addition, the subfield of the corresponding TID, 'Link for LL MU EDCA on TID n' subfield, may be located after the LL MU EDCA indicator subfield.

In order to indicate the links to which MU EDCA applies for the corresponding TID n in each 'Link for LL MU EDCA on TID n' subfield, the bitmap corresponding to each link may have a value of 1 or 0. In order to indicate all links based on the bitmap, each subfield may have a length of 2 octets.

For example, TIDs to which MU EDCA is applied are TID 0, 1, 2, 3, and this assumes the case of operating on Link 0, 1, 2, 13, 14, 15. In this case, the LL MU EDCA indicator subfield value is set to '11110000', which means that MU EDCA is applied to TID 0, 1, 2, 3.

Additionally, a 'Link for LL MU EDCA on TID n' subfield corresponding to TID n having a value of 1 may exist. Within the LL MU EDCA mapping field, the 'Link for LL MU EDCA on TID 0' subfield, the 'Link for LL MU EDCA on TID 1' subfield, the 'Link for LL MU EDCA on TID 2' subfield, and the 'Link for LL MU EDCA on TID 3' subfield may be arranged in this order after the LL MU EDCA indicator subfield.

The LL MU EDCA mapping field may have a total length of 9 octets. The value of the 'Link for LL MU EDCA on TID 0' subfield may be set to '1110000000000111'. This means that TID 0 with MU EDCA applied operates on Link 0, 1, 2, 13, 14, and 15. Here, the 'Link for LL MU EDCA on TID 1' subfield, 'Link for LL MU EDCA on TID 2' subfield, and 'Link for LL MU EDCA on TID 3' subfield may also have the same values. This may mean that TIDs with MU EDCA applied operate on Link 0, 1, 2, 13, 14, and 15.

In the case of (c) of Fig. 15, the TIDs to which MU EDCA is applied on Links 0, 1, 2, 3, 13, 14, and 15 are the same, but this is not limited thereto. The TIDs to which MU EDCA is applied on each link may be different. For example, the TIDs to which MU EDCA is applied on Links 0 and 1 may be TID 0 and TID 3, and the TIDs to which MU EDCA is applied on Link 3 may be TID 1 and TID 2.

### Embodiment 5

Embodiment 5 relates to a method of indicating MU EDCA applied to TID of Link(s) through a new element.

Specifically, in embodiments 1 to 4, a case is described where MU EDCA application information included in a TID-to-Link mapping element is signaled together when the TID-to-Link mapping element is signaled. Embodiment 5 relates to a method of transmitting and receiving information on MU EDCA applied among TIDs mapped on each link through an element separate from the TID-to-Link mapping element.

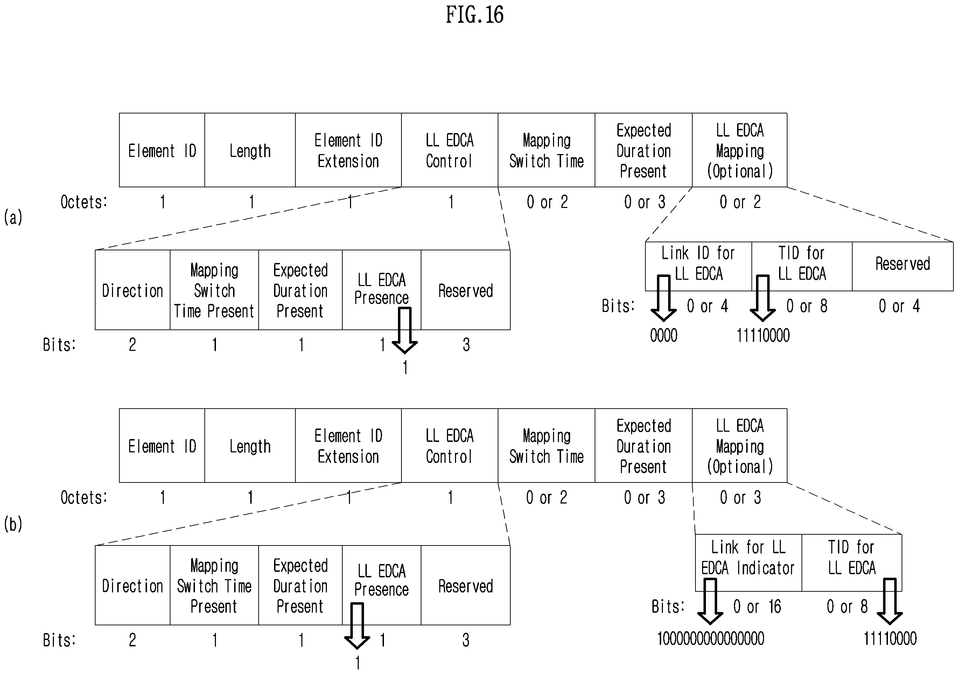

As illustrated in (a) and (b) of FIG. 16, the novel element proposed in the present disclosure may be based on the MU EDCA parameter set element. If the LL MU EDCA parameter set element disclosed in Embodiments 3 and 4 exists, the novel element may be based on the LL MU EDCA parameter set. Here, the LL EDCA parameter set means an EDCA parameter set for LL data and may be expressed by various names.

The new element of the present disclosure may be transmitted separately from the TID-To-Link mapping element. As another example, to be used together with the TID-To-Link mapping element, the new element may be transmitted positioned after order 4 (e.g., order 5) on the TID-To-Link mapping request/response frame action field. The names of the new LL EDCA mapping elements and the names of the fields included therein, as illustrated in (a) and (b) of FIG. 16, may be implemented in various ways.

A new LL EDCA mapping element based on the elements defined in Embodiments 1 and 3 may be configured as shown in (a) and (b) of Fig. 16. The LL EDCA mapping element illustrated in (a) of Fig. 16 may indicate a link operating MU EDCA with a Link ID, and the LL EDCA mapping element illustrated in (b) of Fig. 16 can indicate a link operating MU EDCA through a bitmap.

For example, the LL EDCA control field of the LL EDCA mapping element may include a direction subfield, a mapping switch time presence subfield, an expected duration presence subfield, and an LL EDCA presence subfield.

The direction subfield may indicate UL or DL (or P2P), the mapping switch time presence subfield indicates whether a mapping switch time field exists, the expected duration presence subfield indicates whether an expected duration field exists, and the LL EDCA presence subfield can indicate whether an LL EDCA mapping field exists.

There are a mapping switch time subfield and an expected duration presence subfield on the LL EDCA control field, and these subfields may serve as a timer used when a TID to which MU EDCA is applied operates on a link in the TID-to-Link mapping subfield.

The LL EDCA mapping field in (a) of Fig. 16 may include a 'Link ID for LL EDCA' subfield indicating a link ID on which MU EDCA operates. In addition, the LL EDCA mapping field may include a 'TID for LL EDCA' subfield indicating TIDs applying MU EDCA to the corresponding link through a bitmap.

The 'Link ID for LL EDCA' subfield has a size of 4 bits to indicate the Link ID, and the 'TID for LL EDCA' field may have a size of 8 bits (1 octet) to indicate, as a bitmap, whether MU EDCA of TID 0 to TID 7 is applied. In order to match the length of the LL EDCA mapping field to an octet, the LL EDCA mapping field may have 4 reserved bits.

The LL EDCA mapping field in (b) of Fig. 16 may include a 'Link for LL EDCA Indicator' subfield in the form of a bitmap indicating a link on which MU EDCA operates. The LL EDCA mapping field may include a 'TID for LL EDCA' subfield for indicating a TID to which MU EDCA is applied on the corresponding link.

The 'Link for LL EDCA indicator' subfield may have a size of 16 bits (2 octets) to indicate the maximum number of links that the MLD has. The 'TID for LL EDCA field' may have a size of 8 bits (1 octet) to indicate, as a bitmap, whether MU EDCA of TID 0 to TID 7 is applied.

For example, when MU EDCA is applied to Link 0, it is assumed that the AC to which MU EDCA is applied is an AC corresponding to TID 0, 1, 2, and 3. At this time, as illustrated in (a) and (b) of FIG. 16, the value of the LL EDCA presence field in the LL EDCA control field may be indicated as 1. However, as illustrated in (a) of FIG. 16, the value of the 'Link ID for LL EDCA' subfield may be set to '0000', and as illustrated in (b) of FIG. 16, the value of the 'Link for LL EDCA indicator' subfield based on the bitmap may be set to '1000000000000000'. In order to indicate TID 0, 1, 2, and 3, the value of the 'TID for LL EDCA' field may be set to '11110000'.

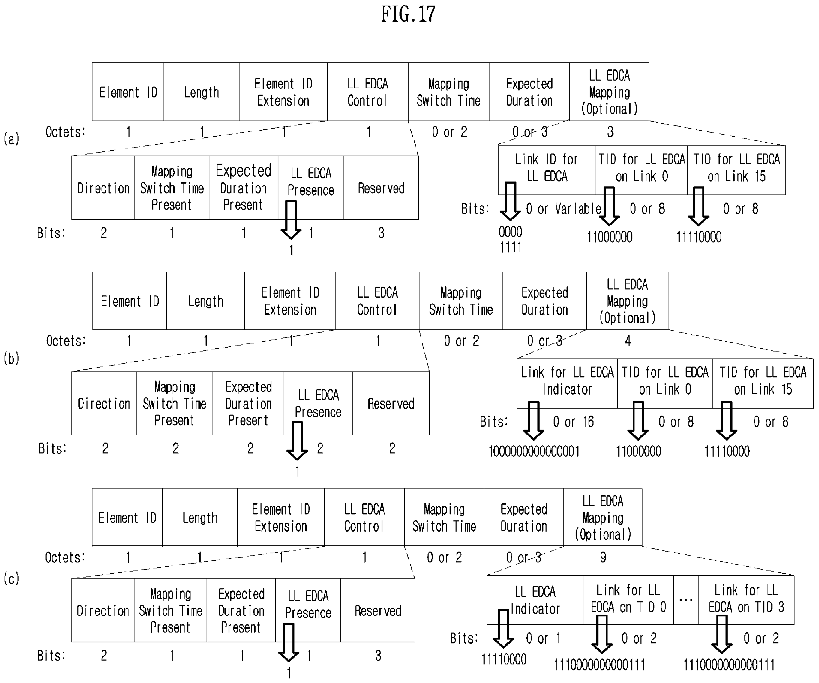

A new LL EDCA mapping element based on the elements defined in Embodiment 2 and 4 can be configured as in (a), (b), and (c) of FIG. 17.

FIG. 17 (a) exemplifies a method of indicating a link to which MU EDCA is applied with a Link ID, Fig. 17 (b) exemplifies a method of indicating a link to **which MU** EDCA is applied with a bitmap, and FIG. 17 (c) exemplifies a method of indicating a TID to which MU EDCA is applied with a bitmap and indicating a link through a field corresponding to each TID.

The configuration and mapping of the LL EDCA control field of the corresponding element and the description of the switch time field/expected interval field have been described above, so any duplicate description will be omitted.

In the LL EDCA mapping field in (a) of Fig. 17, the ID of the link on which MU EDCA operates may be indicated through the 'Link ID for LL EDCA' subfield. The LL EDCA mapping field may include the 'TID for LL EDCA on Link N (N = 0, 1, ..., 15)' subfield which indicates the TID that operates MU EDCA on each link as a bitmap.

The 'Link ID for LL EDCA' subfield may indicate the Link ID in an array format, so it may have a variable length. Here, the length of the field is $\lceil m/8 \rceil$ (m = 4 bits * number of Link IDs), and may have a maximum of 64 bits (8 octets).

Accordingly, the 'TID for LL EDCA on Link N' subfield may correspond Link IDs indicated in an array form to Link N (N=0, 1, ..., 15). Accordingly, information on whether MU EDCA is applied to TIDs 0 to 7 on each link may be indicated as a bitmap, and may have a size of 8 bits (1 octet). Accordingly, the maximum length that the LL EDCA mapping field may have is 192 bits (24 octets).

Here, the number of Link IDs indicated in the 'Link ID for LL EDCA' subfield and the number of 'TID for LL EDCA on Link N' subfield may be the same.

In the case of (a) of Fig. 17, if the 'Link ID for LL EDCA' subfield has one Link ID, the field has a length of 8 bits (1 octet) and the 5th to 8th bit values of the field may be set to 0. This means Link 0, but the 'TID for LL EDCA on Link 0' subfield may not be included in the corresponding TID-to-Link element. In the case described above, if one Link ID indicates Link 0, the 'Link ID for LL EDCA' subfield having a length of 8 bits (1 octet) may have '0000000', and the corresponding TID-to-Link element may include one 'TID for LL EDCA Link 0' subfield.

In (b) of Fig. 17, the LL EDCA mapping field may include a 'Link for LL EDCA Indicator' subfield that indicates a link that operates MU EDCA as a bitmap.

It may include a 'TID for LL EDCA on Link N (N = 0, 1, ..., 15)' subfield that indicates a TID that operates MU EDCA on each link as a bitmap. The 'Link for LL EDCA Indicator' subfield may have a size of 16 bits (2 octets) to indicate the maximum number of links that the MLD can have.

The 'TID for LL EDCA Link N' subfields may indicate TID information on which MU EDCA is applied on link(s) indicated as a link on which MU EDCA operates in the 'Link for LL EDCA Indicator' subfield. That is, the number of 1s in the 'Link for LL EDCA Indicator' subfield and the number of 'TID for LL EDCA on Link N' subfield may be the same.

The LL EDCA mapping field in (c) of Fig. 17 may be composed of an LL EDCA indicator subfield and 'Link for LL EDCA on TID n' subfields, and may have a length of up to 17 octets. Links on which MU EDCA operates may be indicated by a value of 1 in the subfield corresponding to each TID. Here, the presence or absence of a subfield corresponding to each TID may be indicated as 1 (i.e., presence) or 0 (i.e., absence) through the LL EDCA Indicator subfield. The presence or absence of a subfield corresponding to each TID may have a length of 1 octet to indicate TID 0 to TID 7 as a bitmap.

That is, if the bitmap corresponding to TID 0 to TID 7 in the LL EDCA Indicator subfield has a value of 1, it may mean that the corresponding TID is a TID to which MU EDCA is applied. In addition, the subfields of the corresponding TID may be positioned such that the 'Link for LL EDCA on TID n' subfield is located after the LL EDCA Indicator subfield.

In order to indicate the links to which MU EDCA is applied for the corresponding TID n in each 'Link for LL EDCA on TID n' subfield, the bitmap corresponding to each link has a value of 1 or 0, and each subfield may have a length of 2 octets in order to indicate all links with a bitmap.

For example, when MU EDCA is applied to Link 0 and Link 15, it is assumed that the TIDs to which MU EDCA is applied in Link 0 are TID 0 and 1, and the TIDs to which MU EDCA is applied in Link 15 are TID 0, 1, 2, and 3.

Here, as shown in (a) and (b) of Fig. 17, the value of the LL EDCA presence field in the LL EDCA control field may be set to 1. However, since the Link ID is indicated in an array form in Fig. 17 (a), the 'Link ID for LL EDCA' subfield value can be set to '0000' and '1111'. Since the link is indicated as a bitmap in Fig. 17 (b), the 'Link for LL EDCA Indicator' subfield value may be set to '1000000000000001'.

In order to indicate information of TID to which MU EDCA is applied in each link, the value of the 'TID for LL EDCA on Link 0' subfield of (a) and (b) of Fig. 17 may be set to '11000000', and the value of the 'TID for LL EDCA on Link 15' subfield may be set to '11110000'.

As another example of the present disclosure, it is assumed that TIDs to which MU EDCA is applied are TID 0, 1, 2, and 3, and they operate on Links 0, 1, 2, 13, 14, and 15.

Here, the value of the 'LL EDCA Indicator' subfield in (c) of Fig. 17 is set to '11110000', which can indicate that MU EDCA is applied to TIDs 0, 1, 2, and 3.

In addition, a 'Link for LL EDCA on TID n' subfield corresponding to TID n having a value of 1 may be present in the LL EDCA mapping field. As illustrated in (c) of FIG. 17, a 'Link for LL EDCA on TID 0' subfield, a 'Link for LL EDCA on TID 1' subfield, a 'Link for LL EDCA on TID 2' subfield, and a 'Link for LL EDCA on TID 3' subfield may be arranged after the LL EDCA indicator subfield.

And, as illustrated in (c) of FIG. 17, the LL EDCA mapping field may have a total length of 9 octets. The 'Link for LL EDCA on TID 0' subfield value may be set to '1110000000000111', and it may be indicated that TID 0 with MU EDCA applied will operate on Link 0, 1, 2, 13, 14, and 15.

Since other 'Link for LL EDCA on TID 1' subfield, 'Link for LL EDCA on TID 2' subfield, and 'Link for LL EDCA on TID 3' subfield also have the same value, it may be indicated that TIDs with MU EDCA applied will operate on Links 0, 1, 2, 13, 14, and 15.

FIG. 17 (c) illustrates a case where the TIDs to which MU EDCA is applied are the same on Links 0, 1, 2, 3, 13, 14, and 15, but the TIDs to which MU EDCA is applied on each link may be different. For example, the TIDs to which MU EDCA is applied on Link 0 and Link 1 may be TID 0 and TID 3, and the TIDs to which MU EDCA is applied on Link 3 may be TID 1 and TID 2.

Embodiment 6

Embodiment 6 relates to a method for indicating whether to use an MU EDCA parameter set based on an AC. Specifically, Embodiments 1 to 5 relate to a method for indicating TIDs to operate based on an (LL) MU EDCA parameter set. Embodiment 6 relates to a method for indicating AC(s) to use an (LL) MU EDCA parameter set.

(LL) The method of indicating AC(s) to use the MU EDCA parameter set may be based on the method according to Embodiments 1 to 5. Accordingly, the assumptions and rules of TID-to-Link mapping to which the method proposed in Embodiment 6 is applied may be identical to the assumptions and rules described in Embodiments 1 to 5.

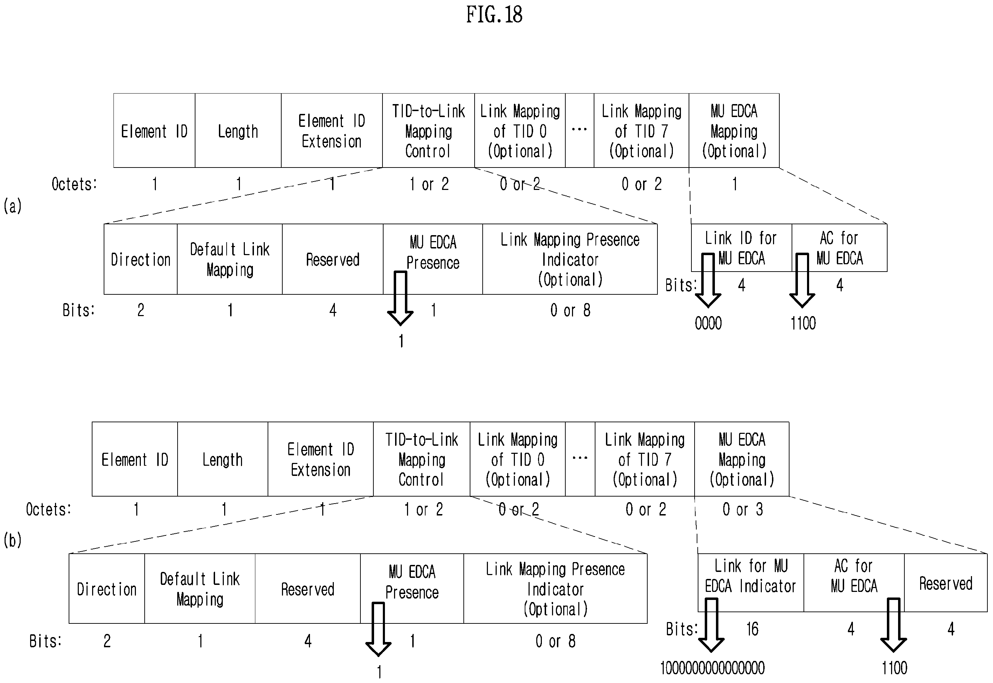

As an example of the present disclosure, (a) of FIG. 18 illustrates a TID-to-Link element indicating a Link ID and AC when operating MU EDCA on only one link. Instead of the 'TID for MU EDCA' subfield based on the TID-to-Link element illustrated in (a) of FIG. 12, an 'AC for MU EDCA' subfield may be used.

For example, the 'AC for MU EDCA' subfield has a length of 4 bits, and each bit can mean AC_BK, AC_BE, AC_VI, AC_VO. In this case, if the value of each bit is set to 1, it can mean that the MU EDCA parameter set is applied to the corresponding AC.

Instead of the 'TID for LL MU EDCA' subfield in (c) of FIG. 14 and the 'TID for LL EDCA' subfield in (a) of FIG. 16, the 'AC for LL (MU) EDCA' subfield may be applied. The MU EDCA mapping field in (a) of FIG. 12, the LL MU EDCA mapping field in (c) of FIG. 14, and the LL EDCA mapping field in (a) of FIG. 16 have a length of 2 octets, but the MU EDCA mapping field in (a) of FIG. 18 may have 1 octet.

FIG. 18 (b) illustrates a TID-to-Link element that indicates a link with an AC and a bitmap when MU EDCA is operated on only one link. As illustrated in FIG. 18 (b), an 'AC for MU EDCA' subfield may be applied instead of the 'TID for MU EDCA' subfield based on the TID-to-Link element illustrated in FIG. 12 (b).

The 'AC for MU EDCA' subfield has a length of 4 bits, and each bit may mean AC_BK, AC_BE, AC_VI, AC_VO. In this case, if the value of each bit is set to 1, it may mean that the MU EDCA parameter set is applied to the corresponding AC.

For example, the 'AC for LL (MU) EDCA' subfield may be applied instead of the 'TID for LL MU EDCA' subfield in (d) of FIG. 14 and the 'TID for LL EDCA' subfield in (b) of FIG. 16.

For example, when MU EDCA operates on Link 0, it is assumed that ACs to which MU EDCA is applied are AC_BK and AC_BE. As shown in (a) and (b) of FIG. 18, the value of the MU EDCA presence field in the TID-to-Link mapping control field can be set to 1.

Here, the 'Link ID for MU EDCA' subfield value of (a) in FIG. 18 may be set to '0000', and the 'Link for MU EDCA indicator' subfield value indicating Link based on the bitmap of (b) in FIG. 18 may be set to '1000000000000000'. In order to indicate AC_BK, AC_BE, the 'AC for MU EDCA' field value may be set to '1100'.

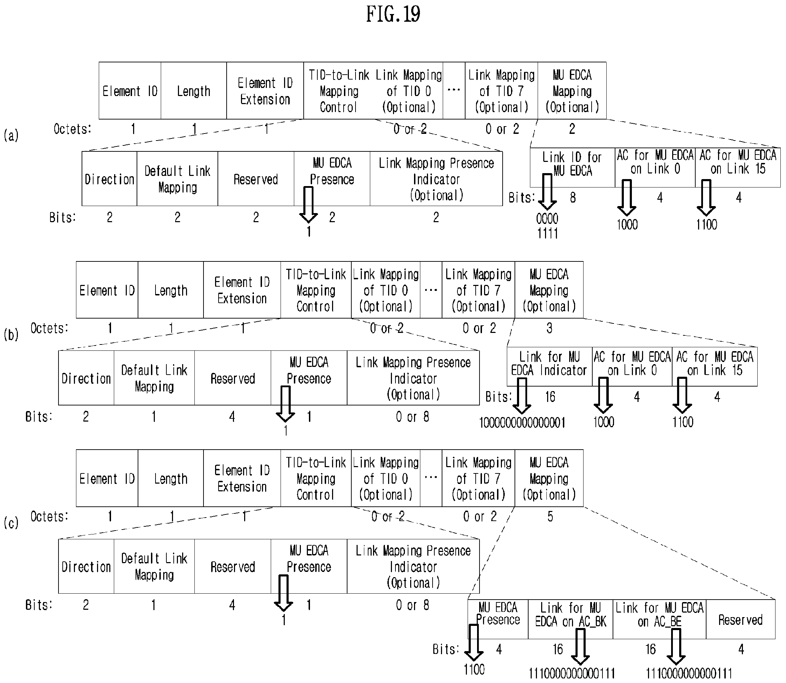

As another example of the present disclosure, (a) of FIG. 19 illustrates a case where 'AC for MU EDCA on Link n' subfields are applied instead of the 'TID for MU EDCA on Link n' subfields illustrated in (a) of FIG. 13. Each of the 'AC for MU EDCA on Link n' subfields has a length of 4 bits, and each bit can mean AC_BK, AC_BE, AC_VI, and AC_VO. In this case, when the value of each bit is set to 1, it means that the MU EDCA parameter set is applied to the corresponding AC.

Instead of the 'TID for LL MU EDCA on Link n' subfield in (a) of FIG. 15 and the 'TID for LL EDCA on Link n' subfield in (a) of FIG. 16, the 'AC for LL (MU) EDCA on Link n' subfield may be applied.

FIG. 19 (b) illustrates a case where the 'AC for MU EDCA on Link n' subfield is applied instead of the 'TID for MU EDCA on Link n' subfield based on the TID-to-Link element illustrated in FIG. 13 (b).

The 'AC for MU EDCA on Link n' subfield has a length of 4 bits, and each bit may mean AC_BK, AC_BE, AC_VI, and AC_VO. In this case, if the value of each bit is set to 1, the MU EDCA parameter set can be applied to the corresponding AC.

Instead of the 'TID for LL MU EDCA on Link n' subfield in (b) of FIG. 15 and the 'TID for LL EDCA on Link n' subfield in (b) of FIG. 17, the 'AC for LL (MU) EDCA on Link n' subfield may be applied.

The MU EDCA mapping field of (b) of FIG. 13, the LL MU EDCA mapping field of (b) of FIG. 15 and the LL EDCA mapping field of (b) of FIG. 17 have 18 octets, but the MU EDCA mapping field of (a) of FIG. 18 may have 10 octets.

FIG. 19(c) illustrates a case where the 'Link for MU EDCA on AC_BK (AC_BE, AC_VI, or AC_VO)' subfield is applied instead of the 'Link for MU EDCA on TID n' subfield based on the TID-to-Link element illustrated in FIG. 13(c).

Here, the 'MU EDCA Indicator' subfield has a length of 4 bits, and each bit can mean AC_BK, AC_BE, AC_VI, AC_VO. At this time, if the value of each bit is set to 1, it means that the MU EDCA parameter set is applied to the corresponding AC.

Instead of the 'Link for LL MU EDCA on TID n' subfield in (c) of FIG. 15 and the 'Link for LL EDCA on TID n' subfield in (c) of FIG. 17, the 'Link for LL (MU) EDCA on AC_BK (AC_BE, AC_VI, or AC_VO)' subfield may be applied.

For example, when MU EDCA is applied to both Link 0 and Link 15, it is assumed that the AC to which MU EDCA is applied in each link corresponds to AC_BK in Link 0 and AC_BK and AC_BE in Link 15. The value of the MU EDCA presence field in the TID-to-Link mapping control field may be set to 1.

However, since the Link ID is indicated in an array format in (a) of FIG. 19, the 'Link ID for MU EDCA' subfield value can be set to '0000' and '1111'. Since the link is indicated through a bitmap in (b) of FIG. 19, the 'Link for MU EDCA Indicator' subfield value can be set to '1000000000000001'. In order to indicate information on AC to which MU EDCA is applied in each link, the 'AC for MU EDCA on Link 0' subfield value of (a) and (b) of FIG. 19 may be set to '1000', and the 'AC for MU EDCA on Link 15' subfield value can be set to '1100'. Accordingly, the length of the MU EDCA mapping field can have a length of 2 octets in (a) of FIG. 19 and a length of 3 octets in (b) of FIG. 19.

As another example of the present disclosure, ACs to which MU EDCA is applied are AC_BK and AC_BE, which are assumed to operate on Links 0, 1, 2, 13, 14, and 15.

As the 'MU EDCA Indicator' subfield value in (c) of FIG. 19 is set to '1100', it may be indicated that MU EDCA is applied to AC_BK and AC_BE.

Additionally, a 'Link for MU EDCA on AC' subfield corresponding to an AC having a value of 1 may exist. As illustrated in (c) of FIG. 19, the 'Link for MU EDCA on AC_BK' subfield and the 'Link for MU EDCA on AC_BE' subfield may be located in the MU EDCA mapping field in that order after the 'MU EDCA Indicator' subfield.

In case of (c) of FIG. 19, the MU EDCA mapping field can have a total length of 5 octets. The 'Link for MU EDCA on AC_BK' subfield value is set to '1110000000000111', so that AC_BK with MU EDCA applied can be indicated to operate on Link 0, 1, 2, 13, 14, and 15.

By having the same value for other 'Link for MU EDCA on AC_BE' subfields, it can be indicated that ACs with MU EDCA applied are to operate on Links 0, 1, 2, 13, 14, 15.

In (c) of Fig. 19, the ACs to which MU EDCA is applied on Links 0, 1, 2, 3, 13, 14, and 15 are exemplified as being the same, but the ACs to which MU EDCA is applied on each link may be different. For example, the ACs to which MU EDCA is applied on Link 0 and Link 1 may be set to AC_BK, and the TIDs to which MU EDCA is applied on Link 3 may be set to AC_BK and AC_BE.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

[Industrial Applicability]

A method proposed by the present disclosure is mainly described based on an example applied to an IEEE 802.11-based system, 5G system, but may be applied to various WLAN or wireless communication systems other than the IEEE 802.11-based system.

**Claims**

1. A method performed by a first station (STA) MLD (multi-link device) in a wireless LAN system, the method comprising:

   transmitting a specific element including a multi-user (MU) enhanced distributed channel access (EDCA) mapping field to a second STA MLD or receiving the specific element from the second STA MLD; and
   performing an MU EDCA operation on at least one link based on the specific element,
   wherein the MU EDCA mapping field includes first information related to at least one link and second information related to at least one traffic identifier (TID) corresponding to the at least one link.

2. The method of claim 1, wherein:
   the specific element is at least one of a TID-to-Link element, an EDCA mapping element, or a LL (low latency) EDCA mapping element.

3. The method of claim 2, wherein:

   at least one of the TID-to-Link element, the EDCA mapping element, or the LL EDCA mapping element includes an EDCA control field or an LL EDCA control field, and
   the MU EDCA control field or the LL EDCA control field includes a first subfield indicating whether the MU EDCA mapping field is present in at least one of the TID-to-Link element, the EDCA mapping element, or the LL EDCA mapping element.

**4.** The method of claim 1, wherein:

the MU EDCA mapping field includes a second subfield including an ID value of the at least one link or a bitmap representing the at least one link, and
the first information is indicated by the second subfield.

**5.** The method of claim 4, wherein:

the MU EDCA mapping field includes at least one third subfield indicating at least one TID associated with the MU EDCA operation corresponding to each of the at least one link, and
the second information is indicated by the at least one third subfield.

**6.** The method of claim 5, wherein:
a number of the at least one third subfield is equal to a number of the at least one link.

**7.** The method of claim 2, wherein:
the TID-to-Link element is configured based on a MU EDCA parameter set element or a LL MU EDCA parameter set element.

**8.** The method of claim 7, wherein:
based on the TID-to-Link element being configured based on the LL MU EDCA parameter set element:

the MU EDCA mapping field is associated with an LL MU EDCA operation,
at least one link performing the LL MU EDCA operation is indicated by the first information, and
the at least one TID associated with the LL MU EDCA operation is indicated by the second information.

**9.** The method of claim 7, wherein:

the LL MU EDCA parameter set element includes a plurality of LL MU TID parameter record fields, and
each of the plurality of LL MU TID parameter record fields includes an LL MU EDCA timer subfield.

**10.** The method of claim 1, wherein:
the MU EDCA mapping field includes third information related to at least one AC (access category) associated with the MU EDCA operation.

**11.** The method of claim 10, wherein:

the MU EDCA mapping field includes at least one fourth subfield indicating at least one AC corresponding to each of the at least one link, and
the third information is indicated by the fourth subfield.

**12.** The method of claim 1, wherein:

the first STA MLD is a non-access point (AP) STA MLD, and
the second STA MLD is an AP MLD.

**13.** A first station (STA) MLD (multi-link device) operating in a wireless LAN system, the first STA MLD comprising:

at least one transceiver; and
at least one processor coupled to the at least one transceiver,
wherein the at least one processor is configured to:

transmit a specific element including a multi-user (MU) enhanced distributed channel access (EDCA) mapping field to a second STA MLD or receive the specific element from the second STA MLD through the at least one transceiver; and
perform an MU EDCA operation on at least one link based on the specific element,
wherein the MU EDCA mapping field includes first information related to at least one link and second information related to at least one traffic identifier (TID) corresponding to the at least one link.

**14.** A method performed by a second station (STA) MLD (multi-link device) in a wireless LAN system, the method comprising:

generating a specific element including a multi-user (MU) enhanced distributed channel access (EDCA) mapping field; and
transmitting the specific element including the MU EDCA mapping field to a first STA MLD,
wherein the MU EDCA mapping field includes first information related to at least one link and second information related to at least one traffic identifier (TID) corresponding to the at least one link.

**15.** A second station (STA) MLD (multi-link device) operating in a wireless LAN system, the second STA MLD comprising:

at least one transceiver; and
at least one processor coupled to the at least one transceiver,
wherein the at least one processor is configured to:

generate a specific element including a multi-user (MU) enhanced distributed channel access (EDCA) mapping field; and transmit the specific element including the MU EDCA mapping field to a first STA MLD, wherein the MU EDCA mapping field includes first information related to at least one link and second information related to at least one traffic identifier (TID) corresponding to the at least one link.

16. A processing device configured to control a first station (STA) MLD (multi-link device) operating in a wireless LAN system, the processing apparatus comprising:

at least one processor; and at least one computer memory operably connected to the at least one processor and storing instructions that, based on being executed by the at least one processor, perform operations comprising:

transmitting a specific element including a multi-user (MU) enhanced distributed channel access (EDCA) mapping field to a second STA MLD or receiving the specific element from the second STA MLD; and performing an MU EDCA operation on at least one link based on the specific element, wherein the MU EDCA mapping field includes first information related to at least one link and second information related to at least one traffic identifier (TID) corresponding to the at least one link.

17. At least one non-transitory computer-readable medium storing at least one instruction, wherein the at least one instruction executable by at least one processor controls a device operating in a wireless LAN system to:

transmit a specific element including a multi-user (MU) enhanced distributed channel access (EDCA) mapping field to a second STA MLD or receive the specific element from the second STA MLD; and perform an MU EDCA operation on at least one link based on the specific element, wherein the MU EDCA mapping field includes first information related to at least one link and second information related to at least one traffic identifier (TID) corresponding to the at least one link.

EP 4 539 410 A1

# FIG.1

# FIG.2

802.11 Components

BSS 1

STA 1

STA 2

AP

DSM

ESS

DS

AP

STA 3

STA 4

BSS 2

# FIG.3

STA

AP

S310

Probe Request

Probe Response

Discovery

S320

Authentication Request

Authentication Response

Authentication

S330

Association Request

Association Response

Association

S340

RSNA Request

RSNA Response

Security setup

# FIG.4

| busy | Occupied Medium | bo$_e$ | Elapsed Backoff time |

⇩  Packet arrived at MAC   bo$_r$  Residual Backoff time

# FIG.5

EP 4 539 410 A1

FIG.6

| STF | LTF | SIG | ... | DATA |
|-----|-----|-----|-----|------|

| SERVICE | PSDU | PPDU TAIL | PAD |
|---------|------|-----------|-----|

OCTETS:2    2    6    6    6    2    6    2    4    0-7951    4

| FRAME CONTROL | DURATION /ID | ADDRESS 1 | ADDRESS 2 | ADDRESS 3 | SEQUENCE CONTROL | ADDRESS 4 | QoS CONTROL | HT CONTROL | FRAME BODY | FCS |
|---------------|--------------|-----------|-----------|-----------|------------------|-----------|-------------|------------|------------|-----|

◄─────────────────────── MAC HEADER ───────────────────────►

# FIG.7

(a)

| 8 μs | 8 μs | 4 μs | |
|---|---|---|---|
| L-STF | L-LTF | L-SIG | Data |

PPDU Format(IEEE 802.11a/g)

(b)

Data HT-LTFs 4 μs per LTF    Extension HT-LTFs 4 μs per LTF

| 8 μs | 8 μs | 4 μs | 8 μs | 4 μs | | | | | | | |
|---|---|---|---|---|---|---|---|---|---|---|---|
| L-STF | L-LTF | L-SIG | HT-SIG | HT-STF | HT-LTF | ··· | HT-LTF | HT-LTF | ··· | HT-LTF | Data |

HT PPDU Format(IEEE 802.11n)

(c)

| 8 μs | 8 μs | 4 μs | 8 μs | 4 μs | 4 μs per VHT-LTF symbol | 4 μs | |
|---|---|---|---|---|---|---|---|
| L-STF | L-LTF | L-SIG | VHT-SIG-A | VHT-STF | VHT-LTF | VHT-SIG-B | Data |

VHT PPDU Format(IEEE 802.11ac)

(d)

Variable durations per HE-LTF symbol

| 8 μs | 8 μs | 4 μs | 4 μs | 8 μs | 4 μs per symbol | 4 μs | | | | |
|---|---|---|---|---|---|---|---|---|---|---|
| L-STF | L-LTF | L-SIG | RL-SIG | HE-SIG-A | HE-SIG-B | HE-STF | HE-LTF | ··· | HE-LTF | Data | PE |

HE PPDU Format(IEEE 802.11ax)

(e)

EHT-LTF symbol duration depends on the GI + LTF size

| 8μs | 8μs | 4μs | 4μs | 8μs:4μs per symbol | 4μs per symbol | 4μs | | | | |
|---|---|---|---|---|---|---|---|---|---|---|
| L-STF | L-LTF | L-SIG | RL-SIG | U-SIG | EHT-SIG | EHT-STF | EHT-LTF | ··· | EHT-LTF | Data | PE |

EHT MU PPDU format(IEEE 802.11be)

(f)

EHT-LTF symbol duration depends on the GI + LTF size

| 8μs | 8μs | 4μs | 4μs | 8μs:4μs per symbol | 8μs | | | | |
|---|---|---|---|---|---|---|---|---|---|
| L-STF | L-LTF | L-SIG | RL-SIG | U-SIG | EHT-STF | EHT-LTF | ··· | EHT-LTF | Data | PE |

EHT TB PPDU format(IEEE 802.11be)

## FIG.8

TID-To-Link Mapping element format

| Element ID | Length | Element ID Extension | TID-To-Link Mapping Control | Link Mapping Of TID 0 (Optional) | ... | Link Mapping Of TID 7 (Optional) |
|---|---|---|---|---|---|---|

Octets:  1          1          1          1 or 2       0 or 2              0 or 2

TID-To-Link Control field format

B0        B1        B2        B3        B7   B8                    B15

| Direction | Default Link Mapping | Reserved | Link Mapping Presence Indicator (Optional) |
|---|---|---|---|

Bits:      2          1          5              0 or 8

# FIG.9

(a)

| Element ID | Length | Element ID Extension | QoS Info | MUAC_BE Parameter Record | MUAC_BK Parameter Record | MUAC_VI Parameter Record | MUAC_VO Parameter Record |
|---|---|---|---|---|---|---|---|

Octets: 1    1    1    1    3    3    3    3

(b)

| ACI/AIFSN | ECWmin/ ECWmax | MU EDCA Timer |
|---|---|---|

Octets: 1    1    1

(c)

AIFSN

B0    B3    B4    B5    B6    B7

| AIFSN | ACM | ACI | Reserved |
|---|---|---|---|

Bits: 4    1    2    1

(d)

B0    B3    B4    B7

| ECWmin | ECWmax |
|---|---|

FIG. 10

TRANSMITTING A SPECIFIC ELEMENT INCLUDING THE MU EDCA MAPPING FIELD TO THE SECOND STA MLD, OR RECEIVE A SPECIFIC ELEMENT FROM THE SECOND STA MLD ~S1010

PERFORMING MU EDCA OPERATION ON AT LEAST ONE LINK BASED ON THE SPECIFIC ELEMENT ~S1020

FIG. 11

GENERATING A SPECIFIC ELEMENT INCLUDING THE MU EDCA MAPPING FIELD ~S1110

TRANSMITTING A SPECIFIC ELEMENT INCLUDING AN MU EDCA MAPPING FIELD TO THE FIRST STA MLD ~S1120

## FIG.12

(a)

| Element ID | Length | Element ID Extension | TID-to-Link Mapping Control | Link Mapping of TID 0 (Optional) | ... | Link Mapping of TID 7 (Optional) | MU EDCA Mapping (Optional) |
|---|---|---|---|---|---|---|---|

Octets: | 1 | 1 | 1 | 1 or 2 | 0 or 2 | | 0 or 2 | 0 or 2 |

| Direction | Default Link Mapping | Reserved | MU EDCA Presence | Link Mapping Presence Indicator (Optional) |
|---|---|---|---|---|

Bits: | 2 | 1 | 4 | 1 | 0 or 8 |

1

| Link ID for MU EDCA | TID for MU EDCA | Reserved |
|---|---|---|

Bits: | 0 or 4 | 0 or 8 | 0 or 4 |

0000    11110000

(b)

| Element ID | Length | Element ID Extension | TID-to-Link Mapping Control | Link Mapping of TID 0 (Optional) | ... | Link Mapping of TID 7 (Optional) | MU EDCA Mapping (Optional) |
|---|---|---|---|---|---|---|---|

Octets: | 1 | 1 | 1 | 1 or 2 | 0 or 2 | | 0 or 2 | 0 or 3 |

| Direction | Default Link Mapping | Reserved | MU EDCA Presence | Link Mapping Presence Indicator (Optional) |
|---|---|---|---|---|

Bits: | 2 | 1 | 4 | 1 | 0 or 8 |

1

| Link for MU EDCA Indicator | TID for MU EDCA |
|---|---|

Bits: | 0 or 16 | 0 or 8 |

1000000000000000    11110000

# FIG.13

EP 4 539 410 A1

**(a)**

| Element ID | Length | Element ID Extension | TID-to-Link Mapping Control | Link Mapping of TID 0 (Optional) | ... | Link Mapping of TID 7 (Optional) | MU EDCA Mapping (Optional) |
|---|---|---|---|---|---|---|---|

Octets: 1   1   1   0 or 2   0 or 2   3

| Direction | Default Link Mapping | Reserved | MU EDCA Presence | Link Mapping Presence Indicator (Optional) |
|---|---|---|---|---|

Bits: 2   1   4   ⇩1   0 or 8

| Link ID for MU EDCA | TID for MU EDCA on Link 0 | TID for MU EDCA on Link 15 |
|---|---|---|

Bits: ⇩ Variable   ⇩ 0 or 8   ⇩ 0 or 8
0000 1111   11000000   11110000

**(b)**

| Element ID | Length | Element ID Extension | TID-to-Link Mapping Control | Link Mapping of TID 0 (Optional) | ... | Link Mapping of TID 7 (Optional) | MU EDCA Mapping (Optional) |
|---|---|---|---|---|---|---|---|

Octets: 1   1   1   0 or 2   0 or 2   4

| Direction | Default Link Mapping | Reserved | MU EDCA Presence | Link Mapping Presence Indicator (Optional) |
|---|---|---|---|---|

Bits: 2   1   4   ⇩1   0 or 8

| Link for MU EDCA Indicator | TID for MU EDCA on Link 0 | TID for MU EDCA on Link 15 |
|---|---|---|

Bits: ⇩ 0 or 16   ⇩ 0 or 8   ⇩ 0 or 8
1000000000000001   11000000   11110000

**(c)**

| Element ID | Length | Element ID Extension | TID-to-Link Mapping Control | Link Mapping of TID 0 (Optional) | ... | Link Mapping of TID 7 (Optional) | MU EDCA Mapping (Optional) |
|---|---|---|---|---|---|---|---|

Octets: 1   1   1   0 or 2   0 or 2   9

| Direction | Default Link Mapping | Reserved | MU EDCA Presence | Link Mapping Presence Indicator (Optional) |
|---|---|---|---|---|

Bits: 2   1   4   ⇩1   0 or 8

| MU EDCA Indicator | Link for MU EDCA on TID 0 | ... | Link for MU EDCA on TID 3 |
|---|---|---|---|

Bits: ⇩ 0 or 8   ⇩ 0 or 16   ⇩ 0 or 16
11110000   1110000000000111   1110000000000111

# FIG.14

(a)

| Element ID | Length | Element ID Extension | QoS Info | LL MU TID0 Parameter Record | LL MU TID1 Parameter Record | LL MU TID2 Parameter Record | LL MU TID3 Parameter Record | LL MU TID4 Parameter Record | LL MU TID5 Parameter Record | LL MU TID6 Parameter Record | LL MU TID7 Parameter Record |
|---|---|---|---|---|---|---|---|---|---|---|---|
| Octets: 1 | 1 | 1 | 1 | 3 | 3 | 3 | 3 | 3 | 3 | 3 | 3 |

(b)

| ACI/AIFSN | ECWmin/ ECWmax | LL MU EDCA Timer |
|---|---|---|
| Octets: 1 | 1 | 1 |

(c)

| Element ID | Length | Element ID Extension | TID-to-Link Mapping Control | Link Mapping of TID 0 (Optional) | ... | Link Mapping of TID 7 (Optional) | LL MU EDCA mapping (Optional) |
|---|---|---|---|---|---|---|---|
| Octets: 1 | 1 | 1 | 1 or 2 | 0 or 2 | | 0 or 2 | 0 or 2 |

| Direction | Default Link Mapping | Reserved | LL MU EDCA Presence | Link Mapping Presence Indicator (Optional) |
|---|---|---|---|---|
| Bits: 2 | 1 | 4 | 1 | 0 or 8 |

1

| Link ID for LL MU EDCA | TID for LL LL MU EDCA | Reserved |
|---|---|---|
| Bits: 0 or 4 | 0 or 8 | 0 or 4 |
| 0000 | 11110000 | |

(d)

| Element ID | Length | Element ID Extension | TID-to-Link Mapping control | Link Mapping of TID 0 (Optional) | ... | Link Mapping of TID 7 (Optional) | LL MU EDCA Mapping (Optional) |
|---|---|---|---|---|---|---|---|
| Octets: 1 | 1 | 1 | 1 or 2 | 0 or 2 | | 0 or 2 | 0 or 3 |

| Direction | Default Link Mapping | Reserved | LL MU EDCA Presence | Link Mapping Presence Indicator (Optional) |
|---|---|---|---|---|
| Bits: 2 | 1 | 4 | 1 | 0 or 8 |

1

| Link for LL MU EDCA Indicator | TID for LL MU EDCA |
|---|---|
| Bits: 0 or 16 | 0 or 8 |
| 1000000000000000 | 11110000 |

EP 4 539 410 A1

## FIG.15

(a)

| Element ID | Length | Element ID Extension | TID-to-Link Mapping Control | Link Mapping of TID 0 (Optional) | ... | Link Mapping of TID 7 (Optional) | LL MU EDCA mapping (Optional) |
|---|---|---|---|---|---|---|---|

Octets: 1   1   1   0 or 2   0 or 2   3

| Direction | Default Link Mapping | Reserved | LL MU EDCA Presence | Link Mapping Presence Indicator (Optional) |
|---|---|---|---|---|

Bits: 2   1   4   1   0 or 8

1

| Link ID for LL MU EDCA | TID for LL MU EDCA on Link 0 | TID for LL MU EDCA on Link 15 |
|---|---|---|

Bits: Variable   0 or 8   0 or 8

0000 1111   11000000   11110000

(b)

| Element ID | Length | Element ID Extension | TID-to-Link Mapping Control | Link Mapping of TID 0 (Optional) | ... | Link Mapping of TID 7 (Optional) | LL MU EDCA Mapping (Optional) |
|---|---|---|---|---|---|---|---|

Octets: 1   1   1   0 or 2   0 or 2   4

| Direction | Default Link Mapping | Reserved | LL MU EDCA Presence | Link Mapping Presence Indicator (Optional) |
|---|---|---|---|---|

Bits: 2   1   4   1   0 or 8

1

| Link for LL MU EDCA Indicator | TID for LL MU EDCA on Link 0 | TID for LL MU EDCA on Link 15 |
|---|---|---|

Bits: 0 or 16   0 or 8   0 or 8

1000000000000001   11000000   11110000

(c)

| Element ID | Length | Element ID Extension | TID-to-Link Mapping control | Link Mapping of TID 0 (Optional) | ... | Link Mapping of TID 7 (Optional) | LL MU EDCA Mapping (Optional) |
|---|---|---|---|---|---|---|---|

Octets: 1   1   1   0 or 2   0 or 2   9

| Direction | Default Link Mapping | Reserved | LL MU EDCA Presence | Link Mapping Presence Indicator (Optional) |
|---|---|---|---|---|

Bits: 2   1   4   1   0 or 8

1

| LL MU EDCA Indicator | Link for LL MU EDCA on TID 0 | ... | Link for LL MU EDCA on TID 3 |
|---|---|---|---|

Bits: 0 or 8   0 or 16   0 or 16

11110000   1110000000000111   1110000000000111

# FIG.16

(a)

| Element ID | Length | Element ID Extension | LL EDCA Control | Mapping Switch Time | Expected Duration Present | LL EDCA Mapping (Optional) |
|---|---|---|---|---|---|---|
| Octets: 1 | 1 | 1 | 1 | 0 or 2 | 0 or 3 | 0 or 2 |

| Direction | Mapping Switch Time Present | Expected Duration Present | LL EDCA Presence | Reserved |
|---|---|---|---|---|
| Bits: 2 | 1 | 1 | 1 | 3 |

1

| Link ID for LL EDCA | TID for LL EDCA | Reserved |
|---|---|---|
| Bits: 0 or 4 | 0 or 8 | 0 or 4 |
| 0000 | 11110000 | |

(b)

| Element ID | Length | Element ID Extension | LL EDCA Control | Mapping Switch Time | Expected Duration Present | LL EDCA Mapping (Optional) |
|---|---|---|---|---|---|---|
| Octets: 1 | 1 | 1 | 1 | 0 or 2 | 0 or 3 | 0 or 3 |

| Direction | Mapping Switch Time Present | Expected Duration Present | LL EDCA Presence | Reserved |
|---|---|---|---|---|
| Bits: 2 | 1 | 1 | 1 | 3 |

1

| Link for LL EDCA Indicator | TID for LL EDCA |
|---|---|
| Bits: 0 or 16 | 0 or 8 |
| 1000000000000000 | 11110000 |

EP 4 539 410 A1

## FIG.17

(a)

| Element ID | Length | Element ID Extension | LL EDCA Control | Mapping Switch Time | Expected Duration | LL EDCA Mapping (Optional) |
|---|---|---|---|---|---|---|

Octets:  1    1    1    1    0 or 2    0 or 3    3

| Direction | Mapping Switch Time Present | Expected Duration Present | LL EDCA Presence | Reserved |
|---|---|---|---|---|

Bits:  2    1    1    ⇩1    3
1

| Link ID for LL EDCA | TID for LL EDCA on Link 0 | TID for LL EDCA on Link 15 |
|---|---|---|

Bits:  ⇩ 0 or Variable    ⇩ 0 or 8    ⇩ 0 or 8
0000    11000000    11110000
1111

(b)

| Element ID | Length | Element ID Extension | LL EDCA Control | Mapping Switch Time | Expected Duration | LL EDCA Mapping (Optional) |
|---|---|---|---|---|---|---|

Octets:  1    1    1    1    0 or 2    0 or 3    4

| Direction | Mapping Switch Time Present | Expected Duration Present | LL EDCA Presence | Reserved |
|---|---|---|---|---|

Bits:  2    2    2    ⇩2    2
1

| Link for LL EDCA Indicator | TID for LL EDCA on Link 0 | TID for LL EDCA on Link 15 |
|---|---|---|

Bits:  ⇩ 0 or 16    ⇩ 0 or 8    ⇩ 0 or 8
1000000000000001    11000000    11110000

(c)

| Element ID | Length | Element ID Extension | LL EDCA Control | Mapping Switch Time | Expected Duration | LL EDCA Mapping (Optional) |
|---|---|---|---|---|---|---|

Octets:  1    1    1    1    0 or 2    0 or 3    9

| Direction | Mapping Switch Time Present | Expected Duration Present | LL EDCA Presence | Reserved |
|---|---|---|---|---|

Bits:  2    1    1    ⇩1    3
1

| LL EDCA Indicator | Link for LL EDCA on TID 0 | ... | Link for LL EDCA on TID 3 |
|---|---|---|---|

Bits:  ⇩ 0 or 1    ⇩ 0 or 2    ⇩ 0 or 2
11110000    1110000000000111    1110000000000111

# FIG.18

(a)

| Element ID | Length | Element ID Extension | TID-to-Link Mapping Control | Link Mapping of TID 0 (Optional) | ... | Link Mapping of TID 7 (Optional) | MU EDCA Mapping (Optional) |
|---|---|---|---|---|---|---|---|
| Octets: 1 | 1 | 1 | 1 or 2 | 0 or 2 | | 0 or 2 | 1 |

| Direction | Default Link Mapping | Reserved | MU EDCA Presence | Link Mapping Presence Indicator (Optional) |
|---|---|---|---|---|
| Bits: 2 | 1 | 4 | 1 | 0 or 8 |

↓ 1

| Link ID for MU EDCA | AC for MU EDCA |
|---|---|
| Bits: 4 | 4 |

0000    1100

(b)

| Element ID | Length | Element ID Extension | TID-to-Link Mapping Control | Link Mapping of TID 0 (Optional) | ... | Link Mapping of TID 7 (Optional) | MU EDCA Mapping (Optional) |
|---|---|---|---|---|---|---|---|
| Octets: 1 | 1 | 1 | 1 or 2 | 0 or 2 | | 0 or 2 | 0 or 3 |

| Direction | Default Link Mapping | Reserved | MU EDCA Presence | Link Mapping Presence Indicator (Optional) |
|---|---|---|---|---|
| Bits: 2 | 1 | 4 | 1 | 0 or 8 |

↓ 1

| Link for MU EDCA Indicator | AC for MU EDCA | Reserved |
|---|---|---|
| Bits: 16 | 4 | 4 |

1000000000000000    1100

EP 4 539 410 A1

EP 4 539 410 A1

FIG.19

<table>
<tr><td colspan="2" align="center">**INTERNATIONAL SEARCH REPORT**</td><td colspan="2">International application No.<br>**PCT/KR2023/007859**</td></tr>
</table>

**A.    CLASSIFICATION OF SUBJECT MATTER**

**H04L 27/26**(2006.01)i; **H04W 74/08**(2009.01)i; **H04W 84/12**(2009.01)i; **H04B 7/0452**(2017.01)i; **H04W 76/11**(2018.01)i

According to International Patent Classification (IPC) or to both national classification and IPC

**B.    FIELDS SEARCHED**

Minimum documentation searched (classification system followed by classification symbols)

H04L 27/26(2006.01); H04W 74/08(2009.01); H04W 84/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: MU EDCA, 매핑(mapping), 필드(field), STA, AP, MLD, 링크(link), 트래픽 식별자(TID)

**C.    DOCUMENTS CONSIDERED TO BE RELEVANT**

| Category* | Citation of document, with indication, where appropriate, of the relevant passages | Relevant to claim No. |
|---|---|---|
| Y<br><br>A | MONAJEMI, Pooya et al. CC36 Comment resolution for Enterprise-Grade TID Mapping. IEEE 802.11-21/1793r8. 15 May 2022.<br>        See pages 1-53. | 1-2,7,10,12-17<br>3-6,8-9,11 |
| Y | CAVALCANTI, Dave et al. QoS Management framework in 802.11be. IEEE 802.11-20/0418r4. 12 August 2020.<br>        See slides 1-30. | 1-2,7,10,12-17 |
| A | MONAJEMI, Pooya et al. TID to Link Mapping Enhancements. IEEE 802.11-21/1611r4. 17 November 2021.<br>        See slides 1-18. | 1-17 |
| A | KR 10-2021-0077801 A (CANON KABUSHIKI KAISHA) 25 June 2021 (2021-06-25)<br>        See paragraphs [0136]-[0373] and figure 1. | 1-17 |

☑ Further documents are listed in the continuation of Box C.          ☑ See patent family annex.

| | |
|---|---|
| *      Special categories of cited documents: | "T"    later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"    document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"    document member of the same patent family |

| Date of the actual completion of the international search | Date of mailing of the international search report |
|---|---|
| **08 September 2023** | **11 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/007859** |

**C.      DOCUMENTS CONSIDERED TO BE RELEVANT**

| Category* | Citation of document, with indication, where appropriate, of the relevant passages | Relevant to claim No. |
| --- | --- | --- |
| A | WO 2018-048229 A1 (WILUS INSTITUTE OF STANDARDS AND TECHNOLOGY INC.) 15 March 2018 (2018-03-15)<br>    See paragraphs [0064]-[0273] and figure 6. | 1-17 |

Form PCT/ISA/210 (second sheet) (July 2022)

**INTERNATIONAL SEARCH REPORT**
Information on patent family members

International application No.

**PCT/KR2023/007859**

| Patent document cited in search report | | | Publication date (day/month/year) | Patent family member(s) | | | Publication date (day/month/year) |
|---|---|---|---|---|---|---|---|
| KR | 10-2021-0077801 | A | 25 June 2021 | CN | 109845381 | A | 04 June 2019 |
| | | | | CN | 109845381 | B | 27 December 2022 |
| | | | | CN | 115734383 | A | 03 March 2023 |
| | | | | CN | 115884429 | A | 31 March 2023 |
| | | | | CN | 115968049 | A | 14 April 2023 |
| | | | | JP | 2020-500457 | A | 09 January 2020 |
| | | | | JP | 2021-005893 | A | 14 January 2021 |
| | | | | JP | 2022-033298 | A | 28 February 2022 |
| | | | | JP | 2023-083493 | A | 15 June 2023 |
| | | | | JP | 6772377 | B2 | 21 October 2020 |
| | | | | JP | 7005720 | B2 | 24 January 2022 |
| | | | | JP | 7269385 | B2 | 08 May 2023 |
| | | | | KR | 10-2019-0065399 | A | 11 June 2019 |
| | | | | KR | 10-2021-0018521 | A | 17 February 2021 |
| | | | | KR | 10-2022-0119532 | A | 29 August 2022 |
| | | | | KR | 10-2214867 | B1 | 10 February 2021 |
| | | | | KR | 10-2268546 | B1 | 24 June 2021 |
| | | | | KR | 10-2435538 | B1 | 24 August 2022 |
| | | | | US | 10893539 | B2 | 12 January 2021 |
| | | | | US | 11595996 | B2 | 28 February 2023 |
| | | | | US | 2019-0254072 | A1 | 15 August 2019 |
| | | | | US | 2021-0051721 | A1 | 18 February 2021 |
| | | | | US | 2023-0113934 | A1 | 13 April 2023 |
| | | | | WO | 2018-073171 | A1 | 26 April 2018 |
| WO | 2018-048229 | A1 | 15 March 2018 | CN | 109075907 | A | 21 December 2018 |
| | | | | CN | 109075907 | B | 09 July 2021 |
| | | | | CN | 109213435 | A | 15 January 2019 |
| | | | | CN | 109314882 | A | 05 February 2019 |
| | | | | CN | 109314882 | B | 22 March 2022 |
| | | | | CN | 109314997 | A | 05 February 2019 |
| | | | | CN | 109417817 | A | 01 March 2019 |
| | | | | CN | 109417817 | B | 14 October 2022 |
| | | | | CN | 109792776 | A | 21 May 2019 |
| | | | | CN | 109792776 | B | 02 December 2022 |
| | | | | CN | 109792779 | A | 21 May 2019 |
| | | | | CN | 109792779 | B | 20 June 2023 |
| | | | | CN | 110089148 | A | 02 August 2019 |
| | | | | CN | 110089148 | B | 04 October 2022 |
| | | | | CN | 110115093 | A | 09 August 2019 |
| | | | | CN | 110115093 | B | 01 April 2022 |
| | | | | CN | 113572579 | A | 29 October 2021 |
| | | | | CN | 113572580 | A | 29 October 2021 |
| | | | | CN | 113572581 | A | 29 October 2021 |
| | | | | CN | 114745805 | A | 12 July 2022 |
| | | | | CN | 114745806 | A | 12 July 2022 |
| | | | | CN | 114745807 | A | 12 July 2022 |
| | | | | CN | 114866197 | A | 05 August 2022 |
| | | | | CN | 114884628 | A | 09 August 2022 |
| | | | | CN | 114900270 | A | 12 August 2022 |
| | | | | CN | 115604761 | A | 13 January 2023 |

Form PCT/ISA/210 (patent family annex) (July 2022)

INTERNATIONAL SEARCH REPORT
Information on patent family members

International application No.

**PCT/KR2023/007859**

| Patent document cited in search report | Publication date (day/month/year) | Patent family member(s) | | | Publication date (day/month/year) |
|---|---|---|---|---|---|
| | | CN | 115604762 | A | 13 January 2023 |
| | | CN | 115604763 | A | 13 January 2023 |
| | | CN | 115664585 | A | 31 January 2023 |
| | | CN | 115664586 | A | 31 January 2023 |
| | | CN | 115664587 | A | 31 January 2023 |
| | | CN | 115765952 | A | 07 March 2023 |
| | | CN | 115765953 | A | 07 March 2023 |
| | | CN | 115801210 | A | 14 March 2023 |
| | | EP | 3484229 | A1 | 15 May 2019 |
| | | EP | 3484229 | A4 | 11 March 2020 |
| | | EP | 3484229 | B1 | 11 May 2022 |
| | | EP | 3512289 | A1 | 17 July 2019 |
| | | EP | 3512289 | A4 | 10 June 2020 |
| | | EP | 3512289 | B1 | 26 January 2022 |
| | | EP | 3562203 | A1 | 30 October 2019 |
| | | EP | 3562203 | A4 | 02 September 2020 |
| | | EP | 3565365 | A1 | 06 November 2019 |
| | | EP | 3565365 | A4 | 05 August 2020 |
| | | EP | 3565365 | B1 | 11 May 2022 |
| | | EP | 4013179 | A1 | 15 June 2022 |
| | | EP | 4044751 | A1 | 17 August 2022 |
| | | EP | 4047983 | A1 | 24 August 2022 |
| | | JP | 2019-527005 | A | 19 September 2019 |
| | | JP | 2019-527502 | A | 26 September 2019 |
| | | JP | 2020-174408 | A | 22 October 2020 |
| | | JP | 2020-174409 | A | 22 October 2020 |
| | | JP | 2020-188509 | A | 19 November 2020 |
| | | JP | 2020-188510 | A | 19 November 2020 |
| | | JP | 2020-502938 | A | 23 January 2020 |
| | | JP | 2020-504580 | A | 06 February 2020 |
| | | JP | 2021-106432 | A | 26 July 2021 |
| | | JP | 2022-120148 | A | 17 August 2022 |
| | | JP | 2022-133389 | A | 13 September 2022 |
| | | JP | 2023-071954 | A | 23 May 2023 |
| | | JP | 6740447 | B2 | 12 August 2020 |
| | | JP | 6746805 | B2 | 26 August 2020 |
| | | JP | 6874139 | B2 | 19 May 2021 |
| | | JP | 7055177 | B2 | 15 April 2022 |
| | | JP | 7076452 | B2 | 27 May 2022 |
| | | JP | 7091395 | B2 | 27 June 2022 |
| | | JP | 7091396 | B2 | 27 June 2022 |
| | | JP | 7102471 | B2 | 19 July 2022 |
| | | JP | 7242746 | B2 | 20 March 2023 |
| | | KR | 10-2018-0135911 | A | 21 December 2018 |
| | | KR | 10-2018-0135950 | A | 21 December 2018 |
| | | KR | 10-2019-0005307 | A | 16 January 2019 |
| | | KR | 10-2019-0008537 | A | 24 January 2019 |
| | | KR | 10-2019-0016039 | A | 15 February 2019 |
| | | KR | 10-2019-0040227 | A | 17 April 2019 |
| | | KR | 10-2019-0045921 | A | 03 May 2019 |

Form PCT/ISA/210 (patent family annex) (July 2022)

48

<table>
<tr><td colspan="2"><b>INTERNATIONAL SEARCH REPORT</b><br>Information on patent family members</td><td colspan="2">International application No.<br><br><b>PCT/KR2023/007859</b></td></tr>
<tr><td>Patent document<br>cited in search report</td><td>Publication date<br>(day/month/year)</td><td>Patent family member(s)</td><td>Publication date<br>(day/month/year)</td></tr>
<tr><td></td><td></td><td>KR 10-2019-0089936 A</td><td>31 July 2019</td></tr>
<tr><td></td><td></td><td>KR 10-2019-0092452 A</td><td>07 August 2019</td></tr>
<tr><td></td><td></td><td>KR 10-2020-0020909 A</td><td>26 February 2020</td></tr>
<tr><td></td><td></td><td>KR 10-2020-0108376 A</td><td>17 September 2020</td></tr>
<tr><td></td><td></td><td>KR 10-2020-0125769 A</td><td>04 November 2020</td></tr>
<tr><td></td><td></td><td>KR 10-2020-0128439 A</td><td>12 November 2020</td></tr>
<tr><td></td><td></td><td>KR 10-2021-0032010 A</td><td>23 March 2021</td></tr>
<tr><td></td><td></td><td>KR 10-2021-0068621 A</td><td>09 June 2021</td></tr>
<tr><td></td><td></td><td>KR 10-2021-0071105 A</td><td>15 June 2021</td></tr>
<tr><td></td><td></td><td>KR 10-2021-0135366 A</td><td>12 November 2021</td></tr>
<tr><td></td><td></td><td>KR 10-2021-0137240 A</td><td>17 November 2021</td></tr>
<tr><td></td><td></td><td>KR 10-2022-0013001 A</td><td>04 February 2022</td></tr>
<tr><td></td><td></td><td>KR 10-2022-0031144 A</td><td>11 March 2022</td></tr>
<tr><td></td><td></td><td>KR 10-2022-0034915 A</td><td>18 March 2022</td></tr>
<tr><td></td><td></td><td>KR 10-2022-0035987 A</td><td>22 March 2022</td></tr>
<tr><td></td><td></td><td>KR 10-2022-0054899 A</td><td>03 May 2022</td></tr>
<tr><td></td><td></td><td>KR 10-2022-0082927 A</td><td>17 June 2022</td></tr>
<tr><td></td><td></td><td>KR 10-2022-0083843 A</td><td>20 June 2022</td></tr>
<tr><td></td><td></td><td>KR 10-2022-0098042 A</td><td>08 July 2022</td></tr>
<tr><td></td><td></td><td>KR 10-2022-0107083 A</td><td>01 August 2022</td></tr>
<tr><td></td><td></td><td>KR 10-2022-0116574 A</td><td>23 August 2022</td></tr>
<tr><td></td><td></td><td>KR 10-2022-0126806 A</td><td>16 September 2022</td></tr>
<tr><td></td><td></td><td>KR 10-2022-0132045 A</td><td>29 September 2022</td></tr>
<tr><td></td><td></td><td>KR 10-2022-0133328 A</td><td>04 October 2022</td></tr>
<tr><td></td><td></td><td>KR 10-2022-0134664 A</td><td>05 October 2022</td></tr>
<tr><td></td><td></td><td>KR 10-2023-0098918 A</td><td>04 July 2023</td></tr>
<tr><td></td><td></td><td>KR 10-2072326 B1</td><td>03 February 2020</td></tr>
<tr><td></td><td></td><td>KR 10-2157470 B1</td><td>17 September 2020</td></tr>
<tr><td></td><td></td><td>KR 10-2173329 B1</td><td>03 November 2020</td></tr>
<tr><td></td><td></td><td>KR 10-2190240 B1</td><td>14 December 2020</td></tr>
<tr><td></td><td></td><td>KR 10-2229580 B1</td><td>19 March 2021</td></tr>
<tr><td></td><td></td><td>KR 10-2229583 B1</td><td>19 March 2021</td></tr>
<tr><td></td><td></td><td>KR 10-2262155 B1</td><td>08 June 2021</td></tr>
<tr><td></td><td></td><td>KR 10-2264550 B1</td><td>14 June 2021</td></tr>
<tr><td></td><td></td><td>KR 10-2324941 B1</td><td>11 November 2021</td></tr>
<tr><td></td><td></td><td>KR 10-2353826 B1</td><td>08 February 2022</td></tr>
<tr><td></td><td></td><td>KR 10-2371750 B1</td><td>08 March 2022</td></tr>
<tr><td></td><td></td><td>KR 10-2371756 B1</td><td>08 March 2022</td></tr>
<tr><td></td><td></td><td>KR 10-2374928 B1</td><td>16 March 2022</td></tr>
<tr><td></td><td></td><td>KR 10-2390645 B1</td><td>28 April 2022</td></tr>
<tr><td></td><td></td><td>KR 10-2407199 B1</td><td>10 June 2022</td></tr>
<tr><td></td><td></td><td>KR 10-2411787 B1</td><td>23 June 2022</td></tr>
<tr><td></td><td></td><td>KR 10-2415048 B1</td><td>01 July 2022</td></tr>
<tr><td></td><td></td><td>KR 10-2424950 B1</td><td>27 July 2022</td></tr>
<tr><td></td><td></td><td>KR 10-2432953 B1</td><td>18 August 2022</td></tr>
<tr><td></td><td></td><td>KR 10-2442012 B1</td><td>13 September 2022</td></tr>
<tr><td></td><td></td><td>KR 10-2442014 B1</td><td>13 September 2022</td></tr>
<tr><td></td><td></td><td>KR 10-2445912 B1</td><td>22 September 2022</td></tr>
<tr><td></td><td></td><td>KR 10-2450270 B1</td><td>30 September 2022</td></tr>
<tr><td></td><td></td><td>KR 10-2549018 B1</td><td>29 June 2023</td></tr>
</table>

Form PCT/ISA/210 (patent family annex) (July 2022)

| INTERNATIONAL SEARCH REPORT | International application No. |
|---|---|
| Information on patent family members | **PCT/KR2023/007859** |

| Patent document cited in search report | Publication date (day/month/year) | Patent family member(s) | | | Publication date (day/month/year) |
|---|---|---|---|---|---|
| | | KR | 10-2549027 | B1 | 29 June 2023 |
| | | KR | 10-2558123 | B1 | 21 July 2023 |
| | | KR | 10-2567626 | B1 | 17 August 2023 |
| | | US | 10491355 | B2 | 26 November 2019 |
| | | US | 10536979 | B2 | 14 January 2020 |
| | | US | 10880924 | B2 | 29 December 2020 |
| | | US | 10904927 | B2 | 26 January 2021 |
| | | US | 10931396 | B2 | 23 February 2021 |
| | | US | 10966251 | B2 | 30 March 2021 |
| | | US | 11095416 | B2 | 17 August 2021 |
| | | US | 11116035 | B2 | 07 September 2021 |
| | | US | 11368987 | B2 | 21 June 2022 |
| | | US | 11405161 | B2 | 02 August 2022 |
| | | US | 11445546 | B2 | 13 September 2022 |
| | | US | 11470643 | B2 | 11 October 2022 |
| | | US | 11516879 | B2 | 29 November 2022 |
| | | US | 11523464 | B2 | 06 December 2022 |
| | | US | 11528747 | B2 | 13 December 2022 |
| | | US | 11540169 | B2 | 27 December 2022 |
| | | US | 11664926 | B2 | 30 May 2023 |
| | | US | 11716759 | B2 | 01 August 2023 |
| | | US | 2019-0012109 | A1 | 10 January 2019 |
| | | US | 2019-0075491 | A1 | 07 March 2019 |
| | | US | 2019-0082468 | A1 | 14 March 2019 |
| | | US | 2019-0132107 | A1 | 02 May 2019 |
| | | US | 2019-0208571 | A1 | 04 July 2019 |
| | | US | 2019-0223219 | A1 | 18 July 2019 |
| | | US | 2019-0313466 | A1 | 10 October 2019 |
| | | US | 2019-0319738 | A1 | 17 October 2019 |
| | | US | 2020-0052860 | A1 | 13 February 2020 |
| | | US | 2020-0163129 | A1 | 21 May 2020 |
| | | US | 2020-0351059 | A1 | 05 November 2020 |
| | | US | 2021-0076423 | A1 | 11 March 2021 |
| | | US | 2021-0105818 | A1 | 08 April 2021 |
| | | US | 2021-0152275 | A1 | 20 May 2021 |
| | | US | 2021-0152276 | A1 | 20 May 2021 |
| | | US | 2021-0176799 | A1 | 10 June 2021 |
| | | US | 2021-0185731 | A1 | 17 June 2021 |
| | | US | 2021-0185732 | A1 | 17 June 2021 |
| | | US | 2021-0352760 | A1 | 11 November 2021 |
| | | US | 2021-0352761 | A1 | 11 November 2021 |
| | | US | 2022-0272772 | A1 | 25 August 2022 |
| | | US | 2022-0329393 | A1 | 13 October 2022 |
| | | US | 2022-0361245 | A1 | 10 November 2022 |
| | | US | 2022-0377606 | A1 | 24 November 2022 |
| | | US | 2022-0377607 | A1 | 24 November 2022 |
| | | US | 2023-0055982 | A1 | 23 February 2023 |
| | | WO | 2017-196103 | A1 | 16 November 2017 |
| | | WO | 2017-196104 | A1 | 16 November 2017 |
| | | WO | 2017-217766 | A1 | 21 December 2017 |

Form PCT/ISA/210 (patent family annex) (July 2022)

INTERNATIONAL SEARCH REPORT
Information on patent family members

International application No.

**PCT/KR2023/007859**

| Patent document cited in search report | Publication date (day/month/year) | Patent family member(s) | | Publication date (day/month/year) |
|---|---|---|---|---|
| | | WO | 2018-009012 A1 | 11 January 2018 |
| | | WO | 2018-056771 A1 | 29 March 2018 |
| | | WO | 2018-117697 A1 | 28 June 2018 |
| | | WO | 2018-124725 A1 | 05 July 2018 |

Form PCT/ISA/210 (patent family annex) (July 2022)